# EUROPEAN PATENT SPECIFICATION

(11) **EP 1 117 625 B1**
(45) Date of publication and mention of the grant of the patent: **05.06.2002**
(21) Application number: 99920579.2
(22) Date of filing: 04.03.1999
(51) Int. Cl.: C04B 35/573, C09K 3/14, B23B 27/14

(54) **METHOD OF MANUFACTURING A DIAMOND COMPOSITE AND A COMPOSITE PRODUCED BY SAME**
VERFAHREN ZUR HERSTELLUNG EINES DIAMANTKOMPOSITS UND EIN DURCH DASSELBE HERGESTELLTES KOMPOSIT
PROCEDE DE FABRICATION DE COMPOSITE A BASE DE DIAMANT ET COMPOSITE PRODUIT A L'AIDE DE CE PROCEDE

(30) Priority: 28.09.1998 RU 98118300; 26.01.1999 RU 99100821
(43) Date of publication of application: 25.07.2001
(73) Proprietor: Frenton Limited, Douglas IM1 1SQ, Isle of Man (GB)
(72) Inventor: GORDEEV, Sergey K., St. Petersburg 198332 (RU); EKSTRÖM, Tommy, S-113 35 Stockholm (SE)
(74) Representative: Hyltner, Jan-Olof
(86) International application number: EP9901420
(87) International publication number: WO0018702

(56) References cited:
- EP-A- 0 010 257
- EP-A- 0 012 966
- EP-A- 0 537 004
- WO-A-90/01986
- WO-A-99/12867
- US-A- 4 168 957

## Description

There is a general need of extremely hard (superhard, >40 GPa) materials for many fields of application. These applications may be as tools for cutting, turning, milling, drilling, sawing or grinding operations etc. The hard materials may also be used for their wear, abrasion and erosion resistance when working as bearings, seals, nozzles or in similar cases. The materials may be working on or being in contact with cast iron, steel, non-iron metals, wood, paper, polymers, concrete, stone, marble, soil, cemented carbide and grinding wheels of aluminium oxide, silicon carbide, diamond or cubic boron nitride etc. As being the hardest material known, mono- or polycrystalline diamond is suitable for these purposes. Other common materials used for their hardness are for instance cubic boron nitride (CBN), boron carbide and other ceramics and cemented carbides, but only diamond or CBN containing materials can reach the superhard group of materials.

It is well know that carbon in the diamond structural form is thermodynamically unstable at ambient temperatures and pressures. Nevertheless the decomposition of diamond to graphite (graphitization) is hindered by kinetic reasons and diamonds found in nature have existed for millions of years. However, by increasing the temperature, graphitization of diamond crystals will occur with a process starting from the surface, where the energy to overcome the kinetic hindrance is highest and where defects or catalytic effects from other surface impurities or the atmosphere will influence this process.

By heating in air it is well known that the decomposition and oxidation of diamonds will take place at temperatures as low as 600-700°C. Carbon solving metals, like cobalt, may catalyze a reaction already at about 500°C. The graphitization process is delayed to higher temperatures in vacuum or inert atmosphere and diamonds are most stable in hydrogen gas atmosphere, where the environment is strongly reducing - High quality diamond is stable for long times to about 2000°C.

Different composite bodies with bonded diamond particles are known. The diamond particles may be bonded by a matrix comprising metal and/or ceramic phases and produced by sintering diamond particles in a matrix of such materials, or bonded by the infiltration of silicon or silicon alloys into the diamond body, for instance.

By heating a body of diamond powder in a furnace to high temperatures during extended times, a small amount of uncontrolled and undesirable graphitization might occur depending also on the pressure. In previously reported processes to form densely sintered diamond composite bodies this has been an unwanted effect and different ways of avoiding this have been used. The most practiced technique is to use high pressures during the sintering step and stay in the diamond stable area of the phase diagram at 1300-1600°C, in high-pressure chambers with pressures of 30.000-60.000 atm (HP/HT). See for instance fig.4, in U.S. patent no 4,151,686; for a diamond-graphite phase diagram.

The required extremely high pressures are only achieved by specially made presses and dies. The consequences are high production costs, limited production capacity and limited shapes and sizes of the diamond composite bodies.

There are also methods for production of diamond bodies using lower pressures than needed for the diamond stable area, from about a minimum of 500 psi (about 34 bars) and above, e.g. the method according to U.S. patent 4,124,401.

In the case where the pressure has been in the graphite stable region, for instance using a furnace with protective inert atmosphere, graphitization has been minimized by using short times at high temperature or reducing the sintering temperature for solidification of the body. An example of the latter is to use metal alloys of silicon that have a significantly lower melting temperature than that of pure silicon.

Several patents reveal techniques to produce materials containing diamond, silicon carbide and silicon without using high pressures. There are a number of variations of the process, mainly concerning the use of different carbonaceous materials (hereafter referring to all kinds of non-diamond carbon materials like carbon black, carbon fibres, coke, graphite, pyrolytic carbon etc). In principal the following steps are followed.
A. Non-coated diamond particles or normally, carbon-coated diamond particles and carbonaceous materials are used as precursor materials. According to the examples, US patent 4,220,455 starts with adding a thin layer (500-1000 Angstrom = 50-100 nm) of carbon on the diamonds by a pyrolytic reaction. The pyrolysis is done in vacuum for a few minutes by feeding natural gas or methane, into a furnace with diamond particles at 1200°C. Sometimes diamonds without a pyrolytic carbon layer are used, as in US patent 4,381,271, EPO 0 043 541, EPO 0 056 596 and JP 6-199571A. Both carbon-coated and non-coated diamonds are mixed with carbonaceous materials as a main source of carbon e.g. carbon black, short carbon fibres or cloth and a binder e.t.c before the forming of green bodies.
B. Forming of green bodies of the diamond particle/carbon material mixture is done in a mould. The green bodies contain additionally solvents and temporary or permanent binders to facilitate the forming and to increase the strength of the green body.
C. Work-pieces are made by heat treating the green bodies. Some binders are vaporised without leaving any residues e.g. paraffin, other binders are hardened leaving a carbonaceous residue in the work-piece, e.g. phenol-formaldehyde and epoxy resins.
D. Infiltration of the porous work-piece with molten silicon is done to form silicon carbide in a reaction between the carbon and the silicon. The heat treatment is done in such a manner as to minimise the graphitization of diamond, which is considered harmful. In the examples of US patent 4,220,455 silicon is infiltrated in vacuum when the body is in a mould, at a temperature between 1400°-1550°C for 15 minutes, during which time the reaction between silicon and carbon is completed. US patent 4,242,106 uses a vacuum of 0,01-2,0 torr (1.33-266 Pa) during the infiltration. The required time, depending largely on the size of the body, is determined empirically and takes about 15-20 minutes at a temperature above 1400°C, or 10 minutes at 1500°C. US patent 4,381,271 uses carbon fibres to promote the infiltration of fluid silicon by a capillary action. In most of the patents infiltration is made in a mould. In some earlier patents the infiltration is made outside the mould, like in EPO patent 0 043 541.

The processes where carbon-coated or non-coated diamonds are mixed with carbonaceous materials might have disadvantages, e.g. difficulties in preparing homogeneous mixtures of these materials, difficulties of silicon infiltration due to very small pore sizes and necessity of special equipment for preparing homogenous mixtures.

In the patent RU 2064399 the addition of carbon by pyrolysis is done only after the forming and production of the work-piece. A preformed work-piece of diamond particles or a mixture of diamond particles and carbide grains as filler, is produced with a temporary binder. The binder is evaporated and the work-piece is placed in a reactor, where pyrolytic carbon is deposited on all grains of the body by a pyrolytic reaction from a gas phase, e.g. methane at 950°C for 10 h. After this follows silicon infiltration. The drawbacks of this process are the use of a great amount of hydrocarbon gas and that the processing time is rather long. If carbide grains are used as fillers, the same problems of homogenisation as mentioned above appear.

There are some methods for improving the diamond composite materials produced by the earlier described techniques. One of them is to arrange the diamond particles as graded structures of concentration and size in the material, thereby affecting some properties and also the field of application. A method of making a size graded material by sintering at high pressure and high temperature is disclosed in the patent EPO 0 196 777. The grain size and/or packing density are varied in layers between the front face and rear face to get different wear resistance in these parts. The drawback of this method is that since it uses high pressure-high temperature, the production of the material is more expensive and requires special equipment and there are size limitations.

There are also a number of patents using different amount of diamond in different parts of the composite body. The following patents US 4,242,106; US 4,247,304; US 4,453,951; EPO 0 043 541; EPO 0 056 596 describe the production of layered structures of a final material with a diamond composite layer in contact with a supporting silicon carbide or silicon carbide-silicon substrate, for instance. US patent 4,698,070 describes the production of a composite with a diamond containing portion and a core portion united by a matrix of silicon carbide and silicon. Additional particle layers with other diamond concentration may also be provided and placed e.g. in comers, on the top, in the core.

Generally the drawback of layered materials with different diamond size or concentration is that there may be differences in physical/mechanical properties in the diamond containing and supporting layers, e.g. thermal expansion coefficient and E-modulus, might cause unwanted stress situations at the interface and thereby weaken the composite under stress. Diamonds have a relatively low tensile strength and low toughness, and a distinct difference in diamond content in different parts joined by an interlayer may also affect the fracture resistance of composites. None of the methods described earlier result in bodies with prior specified distribution of diamond particles of different size throughout the material volume, with uniformly changing properties.

The composites of US patent 4,220,455 consist of a mixture of diamond particles of different size in the whole body, i.e. the composite does not have layered structures. The particular sizes used are chosen depending on the desired packing of particles and resulting body. For most abrasive applications particles no greater than about 60 µm are preferred. Preferably to maximise the packing of the particles they should contain a range of sizes, i.e. small, medium and large.

None of the methods described above use graphitization intentionally. Instead the graphitization is considered as harmful and unwanted.

In RU patent 2036779 a preform is moulded of diamond powder eventually together with water or ethyl alcohol, placed in a furnace and impregnated with liquid silicon at 1420-1700° in argon or vacuum. In the process the surface of the diamond grains is minimally graphitized, so the greater part of the diamond is still unchanged. This minor amount of graphite, reacts in contact with infiltrated silicon creating a thin surface layer of silicon carbide that keeps back any further formation of diamond to graphite during the used process. The drawback of this process is poor control and there is no method for governing the amount of produced SiC, residual silicon or porosity left in the composite.

Thus in these previous patents there is no teaching about a well-controlled step of adding carbonaceous materials to a diamond body and no intentional graphitization step for production of materials with desired amount of diamond, silicon carbide and silicon, with low porosity and no graphite.

In contrast to these previous approaches, one important step in the process to prepare a diamond composite according to the present invention is to use a desirable and controlled graphitization that deliberately transforms a layer of intended thickness at the surface of the diamond particles to graphite. Graphitization is a complex process depending not only on the important time-temperature curve of the process, but also on the diamond particle size (smaller particles have a larger relative surface area than coarser particles), type and quality of diamond, and surface defects of diamond. Further the presence of catalytic impurities (carbon-soluble metals like cobalt, nickel or iron), the pressure, the presence of oxygen and the atmosphere (oxidizing atmosphere e.g. carbon monoxide) will have a great influence. Therefore, for a certain starting material, furnace and given process parameters it is important empirically to carefully determine the degree of graphitization. This knowledge will provide the background for an appropriate time-temperature curve for governing the graphitization in a controlled and safe way during production.

In the present process, by changing the relative amount of graphite in the diamond body before the infiltration of silicon or silicon alloy melt, it is possible to prepare a desired phase composition, microstructure and, subsequently, control the material properties. The graphite layer on the diamond particles shall have uniform coverage. The minimum amount of graphite in such layers should allow formation of strong chemical bonding by carbide formation between diamond interfaces and the matrix. The amount of formed carbide shall also be enough to form a tight protective layer. For micron sized or larger diamond particles the graphitization should be at least more than 3 wt-% and preferably lie between 6-30 wt-%, as discussed in detail below.

In most diamond composite bodies produced in the prior art it has been attempted to use very high diamond concentrations to form a direct chemical bonding between the diamond particles, i.e. giving a diamond skeleton structure. This has been supposed to increase the mechanical strength and rigidity of the composites. Surprisingly we have found that such a direct bonding is not needed to achieve good mechanical properties. A direct bonding of the diamonds is not an important or needed factor in our diamond composites, although at the highest diamond concentrations some diamond to diamond contact might occur, in such instances all accessible diamond particle surface, is however, graphitisized.

Not only silicon has been used for the infiltration and bonding of diamond particles. Several patents describe using silicon alloys instead of pure silicon. U.S patent 4,124,401 describes a hot-press method using an eutectiferous silicon alloy for infiltration. U.S patent 5,266,236 uses a boron-silicon alloy in a HP/HT method. U.S patent 4,664,705 discloses a method that infiltrates a silicon alloy through a PCD body, where the binder has earlier preferably been leached out.

In the process according to the present invention in case of using pure silicon as the infiltrate melt into a diamond body (as known from PCT application no PCT/EP98/04414, filed July 16 1998), the products besides diamond will be silicon carbide and residual silicon filling the porosity and resulting in a fully dense body. Materials properties like hardness, toughness and rigidity will be influenced by the amount, distribution and particle size of the different phases.

However, by using a silicon alloy a more complex material will be formed with wider possibilities to prepare materials with desired overall properties for different applications. Besides the phases mentioned above the alloying element could form either carbides with the non-diamond graphite present at the initial stage of the process or form a metal silicide. Residual silicon alloys of varying composition (or even silicon) will be present or small amounts of metal carbosilicides might form.

Boron carbide (B₄C), which is harder than silicon carbide will form resulting in a harder final body, when using boron as an alloying element in silicon. Other strong carbide formers like Ti, Zr, Nb and Ta are predicted from Gibbs energy calculations to form metal carbide rather than metal silicide. The presence of these carbide particles in the microstructure could increase the toughness and not deteriorate high temperature properties. However, kinetic factors might cause some silicide formation. The presence of metal silicides will increase the toughness at low and medium temperatures, but some silicides like those from the iron group will not be beneficial for high temperature use above 1000°C. Other silicides like molybdenum disilicide are known to have good high temperature properties especially in air where initial oxidation forms a silica layer protecting from further oxidation.

The process according to the present invention is a low-pressure process considerably below the pressures required for the diamond stable region and will allow low-cost mass production also of large and/or complex bodies. A novel feature of our production process is that it does not need special presses and dies. For example we do not need to use expensive hot isostatic pressing (HIP) equipment for gas pressures up to 2 kbar. In this case, both the costs of HIP equipment and running costs of the process are very high and the process requires a gas-tight metal, glass or other encapsulation for transfering the pressure to the bodies to be sintered. Stringent safety precautions are in force when using such high gas pressures, and during operation and maintenance of such equipment.

Hot pressing (HP) equipment is available at lower costs where pressures typically from 30 to 1500 bars, are applied to the diamond body by graphite punches during sintering. The production capacity is limited and the sintered bodies are most likely in the form of discs or plates. Complex shaped bodies for engineering purposes cannot be prepared easily. The present invention avoids these limitations.

From a production cost point of view the pressure used should be below approximately 50 bar, preferably below 30 bar. At this pressure very much simpler production equipment can be used and complex shapes can be made.

The lowest production cost and large-scale manufacture is achieved with furnaces using ambient pressure of inert gas or a slight overpressure less than 2 bars. Vacuum can also be used. High production capacity lowers costs drastically and the sizes of the composite components can be increased.

The use of nitrogen as a low-cost inert gas is possible in the latter case as a low pressure gas. However, increasing nitrogen pressure above 2 bars at the melting temperature of silicon or silicon alloys might cause a dramatic reaction between silicon and nitrogen to form silicon nitride. This reaction is strongly exothermic and once started it might be uncontrolled, risking increased local temperatures that could destroy the diamonds and the composite.

The principle object of the present invention is the process for making diamond composites having excellent properties, and the superhard materials produced thereby. The method should be easily performed, fast and cost effective and offer possibilities to control several properties and cost of the final materials.

### SUMMARY OF THE INVENTION

The object of the invention is obtained by a low pressure method for manufacturing a diamond composite, where the diamond particles are bonded by a matrix comprising combinations of the following material phases; silicon carbide; other carbides such as metal carbide or boron carbide; silicon; metal silicides, metal carbosilicides and/or silicon alloys; comprising the steps of forming a work piece, heating the work piece and controlling the heating temperature and heating time so that a certain desired amount of graphite is created by graphitization of diamond particles, thereby creating an intermediate body, and infiltrating a silicon alloy into the intermediate body.

In a preferred embodiment the amount of graphite created by graphitization is 1-50 wt-%, preferably 6-30 wt-% of the amount of diamond and the heating temperature during graphitization is lower than 1700°C. The heating temperature and heating time needed for the graphitization is empirically determined for the heating equipment used. The work piece is formed with a porosity of 25-60 vol-%.

In another embodiment a certain amount of carbon is deposited in the work piece by exposing it to a gaseous hydrocarbon or gaseous hydrocarbons at a temperature exceeding the decomposition temperature for hydrocarbon or hydrocarbons. At least some graphitization of the diamond crystals is done before exposing the work piece to a gaseous hydrocarbon or gaseous hydrocarbons at a temperature exceeding the decomposition temperature for hydrocarbon or hydrocarbons. The intermediate body can be machined into the desired shape and size of the final body before the step of infiltration of liquid silicon alloy.

In a further embodiment the intermediate body is heated together with silicon or silicon alloy that is thereby vaporised, and the body is then machined into the desired shape and size of the final body before the step of infiltration of liquid silicon alloy.

Infiltrating a silicon alloy into the intermediate body is characterized in that said melt is silicon alloy comprising at least one metal from the group consisting of Ti, Zr, Hf, V, Nb, Ta, Cr, Mo, W, Mn, Re, Fe, Co, Ni, Cu, Ag, Al, or the element B or Ge. When referring to metals Germanium (Ge) is considered as a metal. The heat treatment and infiltration of the diamond containing work-piece are performed at a pressure of less than approximately 50 bars of an inert gas, preferably below 30 bars, and most cost efficient below 2 bars inert gas pressure or in vacuum. The infiltration is carried out at temperatures higher than the melting temperature of the melt, i.e. at temperatures higher than 1450°C for most of the silicon alloys or at temperatures higher than 1100°C when using alloys containing Al, Cu, Ag, Fe, Ni, Co, Mn, or Ge. The temperature of the infiltration should be kept less than 1700°C, preferably less than 1600°C.

It is possible to make silicon alloys with the mentioned alloy metals or boron or germanium. Their liquidus temperatures are low, which is important. The graphitization process is better controlled and these silicon alloys have moderate vapor pressure at temperatures in the interval 1200-1700°C. Finally, elements from the selected alloying elements form additional phases in the material which gives the diamond composite valuable properties. These phases can be metal carbides, metal silicides, metal alloys with silicon or ternary metal carbosilicides, or the corresponding phases of boron.

Good results are obtained when using silicon alloys, in which content of alloying element is as follows:
- from Ti, Zr, or Hf is less than 50 wt-%, preferably less than 20 wt-%.
- from V, Nb, or Ta is less than 20 wt-%, preferably less than 10 wt-%.
- from Cr and Re is less than 45 wt-%, preferably less than 20 wt-%.
- from Mo and W is less than 10 wt-%, preferably less than 5 wt-%.
- from Mn, Fe, Co, or Ni is less than 60 wt-%, preferably less than 20 wt-%.
- from Cu and Ag is less than 30 wt-%, preferably less than 15 wt-%.
- from Al and Ge is less than 50 wt-%, preferably less than 20 wt-%.
- from B is less than 20 wt-%, preferably less than 8 wt-%.

Infiltration of liquid silicon alloys into the intermediate body is performed by the most suitable methods, for example, by melting of the corresponding alloy directly on the surface of intermediate body, or, for example, by dipping of intermediate body in the corresponding melt or, for example, by pouring of the corresponding melt on surface of intermediate body. When using alloys it ensures a simple infiltration process connected with the lower melting temperature of alloys compared with individual substances, better wetting of the intermediate body surface, a lower viscosity, and more easily achieved penetration into the totality of pores of the intermediate body. As a result of infiltration a practically non-porous material comprising diamond, silicon carbide and additional phases, content of which is determined by the type of the used metals in the alloy, is produced. Such additional phases can be metal silicides (for example NiSi₂) and/or metal carbides (for example TiC and NbC) and /or alloys of metals (for example Ag) with silicon.

Content of metals (besides silicon) in the final dense diamond composite is less than 30 wt-%, preferably less than 20 wt-%. For some metals the content is naturally limited by the composition of the used silicon alloy and the maximal porosity of the initial work-piece. Thus, for metals from the group of V, Nb, or Ta their content in material is less than 10 wt-%, preferable less than 5 wt-%. For metals from the group of Mo and W their content in material is less than 5 wt-%. Finally, for the metals Fe, Co, and Ni the material content should preferably be less than 10 wt-%.

The work piece can be formed with a uniform or non-uniform distribution of diamond particles with various sizes and qualities. For instance, the diamond particles in the work piece can be distributed in successively decreasing sizes from the surface of the work piece towards the centre thereof. The work piece can in a variant be formed from a homogeneous mixture of diamond crystals of various sizes eventually with the addition of a binder.

In yet another embodiment two or more work pieces are made separately and thereafter being brought together before the heat treatment and the infiltration steps.

The forming of the work piece may be made in a mould, the heat treatment and the infiltration of silicon alloy being made after the work piece has been taken out of the mould.

The forming of the work piece may be made in a mould, the heat treatment and the infiltration of silicon alloy being made having the work piece in a mould.

The invention also relates to a body in which diamond particles are bonded to a matrix of metal-silicon-carbon or boron-silicon-carbon phases, said body comprising at least 20 vol-% of diamond particles, at least 25 vol-% of metal-silicon-carbon or boron-silicon-carbon phases, preferably more than 35 vol-% of metal-silicon-carbon or boron-silicon-carbon phases, the Young's modulus exceeding 450 GPa.

In an embodiment, said body comprising at least 29 vol-% of diamond particles, at least 34 vol-% of metal-silicon-carbon or boron-silicon-carbon phases, the Young's modulus exceeding 540 GPa.

In a preferred embodiment, said body comprises at least 46 vol-% of diamond particles having sizes of about 30 µm at the most, the Young's modulus exceeding 560 GPa.

In another preferred embodiment, said body comprises at least 54 vol-% of diamond particles, at least 60 vol-% of the diamond particles having sizes of at least 50 µm, the Young's modulus exceeding 600 GPa.

In all these embodiments the body maintains its shape and its Young's modulus up to a temperature of 1500°C in vacuum.

In a embodiment, diamond particles of sizes of about 10 µm or less are embedded and included in the matrix, the Vickers hardness of the matrix measured in the area between the diamond particles being greater than 30 GPa for a load of 20 N, the Knoop hardness of the matrix being greater than 30 GPa for a load of 20 N.

In another embodiment the diamond particles have one size fraction of particles being larger than 50 µm and one sizes fraction of particles having a size of 50 µm at the most, the mass ratio falling in the range of 0.25 to 2.5 and the mean particle size being larger than 10µm, preferably larger than 20µm.

In yet another embodiment the diamonds have one size fraction of particles being large diamond particles and one size fraction being small diamond particles, the mass ratio falling in the range of 0.25 to 2.5 and the mean particle size being larger than 10µm, preferably larger than 20µm.

In a variant of the embodiments the body is hollow.

In yet another embodiment, the body comprises large diamond particles of a size larger than 20 µm, the matrix comprising 0-50 vol-% of small diamond particles having sizes less than 20 µm; 20-99 vol-% of silicon carbide; and 1-30 vol-% of other metal-silicon-carbon or boron-silicon-carbon phases, the matrix hardness being 20-63 GPa.

In a first variant, the matrix hardness is 20-30 GPa.

In a second variant, the matrix hardness is 50-63 GPa.

In a third variant, the matrix hardness is 30-50 GPa.

### BRIEF DESCRIPTION OF THE DRAWING

The invention will now be described with reference to the enclosed Figures, of which,
Fig. 1 shows the preferred steps of the method according to the invention in a flowchart,
Fig. 2 shows the degree of graphitization versus the graphitization time at one specific temperature,
Fig. 3 shows the change of work piece porosity during graphitization at different initial work piece porosity, and
Fig. 4a to 4d shows scanning electron micrograph pictures of four different samples, produced by infiltration of different silicon alloys.

### DESCRIPTION OF THE INVENTION

The principle object of the present invention is to manufacture diamond composites having excellent properties with an uncomplicated method in a fast, cost effective and controllable way.
The invention comprises several principles:
- The process uses diamond graphitization intentionally instead of avoiding it.
- Gradients or parameter variations of different kind are used to control both final properties of the product and manufacturing costs.
- Using preforming and near net-shaping technique combined with strengthening of the intermediate body to enable machining to complicated final body shapes and to avoid expensive and difficult machining operations of the infiltrated body.
- A low pressure method, not needing complicated equipment needed for methods using higher pressures.
- Low cost production of large bodies and of large batches of products.

In the process according to the present invention, diamonds of any size may be used. By submicron sized diamonds is meant diamond particles smaller than 1 µm and by small diamonds diamond particles smaller than 20 µm and more preferably smaller than 10 µm. Large sized diamonds, > 20 µm, are used in several applications. For high mechanical strength, especially in engineering components, the size of diamond particles used shall preferably be smaller than 20 µm. Very large diamonds with sizes larger than 60 µm are used for their abrasive ability, often in combination with small diamonds.

### THE PROCESS; INTENTIONAL USE OF DIAMOND GRAPHITIZATION AND OPTIONALLY IN COMBINATION WITH USE OF PYROLYTIC CARBON

The material according to the present invention is achieved by a process that uses graphitization of diamond, optionally combined with pyrolytic deposition of carbon, for production of diamond composites. This signifies that the invention uses diamond graphitization, i.e. partial diamond transformation into graphite efficiently and in a planned and controlled manner.

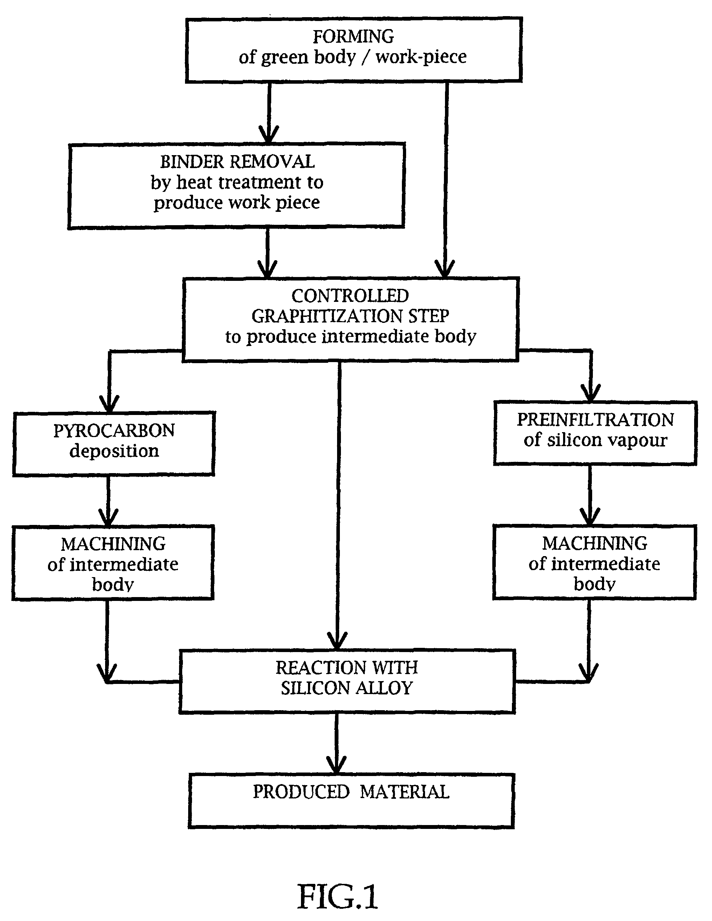

Fig. 1 describes the preferred process steps in a flowchart. The different steps of the process according to the present invention are described by the following:
**Forming of a green body** is done from a mixture of diamond particles of various sizes together with a small amount of a temporary or permanent binder, or alternatively without using a binder. The forming is done using established techniques, for instance by pressing, using slip and slurry casting, injection moulding etc. In the case when a mould is used for forming, the green body is usually removed from the mould.
**Production of a work-piece** is done by evaporating or hardening and decomposing the present solution agents and/or binders in the green body. If a green body is produced without any binders it is considered as a work-piece. The final amount of binder in the work piece is 5 wt-% or less. For provision of a uniform and controllable graphitization throughout the whole work-piece volume, it is undesirable to have impurities from the binder present therein. These may catalyse or inhibit the graphitization process. A reason for having not less than 95 wt.-% diamonds in the work-piece is that precise control of the amount of carbon that will be present and where, is only possible in a body without fillers, and for a minimum amount of binder.
**Heat treatment of a work-piece for obtaining an intermediate body.** The work-piece with a diamond content of 95-100 weight % of the total mass is heat treated to obtain an intermediate body, by using controlled graphitization of diamond, or optionally a combination of controlled graphitization of diamond and deposition of pyrolytic carbon, hereinafter referred to as pyrocarbon. When combined, it is preferred to use graphitization prior to pyrocarbon deposition.
**Graphitization for obtaining an intermediate body**
   During graphitization the work-piece (or the intermediate body with deposited pyrocarbon) is heat treated in vacuum or in a controlled atmosphere, preferably an inert gas at 700°-1900°C, preferably at 1000°-1700°C, and best controlled at 1100-1500°C. Usually graphitization is slow at temperatures lower than 1000°C, but may proceed at even lower temperatures depending on catalytic effects, the atmosphere and equipment used, for instance. At temperatures higher than 1900°C the rate of graphitization is so high that it will be difficult to control with required precision, especially using low quality diamonds. If vacuum pressure is used, it is preferably lower than 1 mmHg. As inert gas nitrogen, argon (or other noble gases), hydrogen or helium may be used, which provides for the absence of oxygen in the system. The process is not restricted to using any specific pressures, but can be used in a wide pressure range. So the inert gas pressure is less important and is chosen according to applicability of the process, e.g. 760 mmHg. A low pressure is preferred for various reasons, e.g. economical and efficiency reasons.
Pyrolytic deposition of carbon into the graphitized intermediate body
   During pyrolytic deposition of carbon into the graphitized intermediate body (or into the work-piece), the body is exposed to a gas of hydrocarbon or hydrocarbons at a temperature that exceeds the decomposition temperature for the current gas or gases, for example natural gas at 750°-950°C, or gas containing acetylene, methane, ethane, propane, pentane, hexane, benzene and their derivatives at 510°-1200°C. The deposition of pyrocarbon strengthens the intermediate body and allows machining of the intermediate body.
**Pre-infiltration of the intermediate body** may be done in order to increase the strength and to allow machining of an intermediate body, as an alternative to the pyrocarbon deposition. Partial pre-infiltration is achieved for example by heating the intermediate body together with silicon/silicon alloy that is thereby vaporised, or by a chemical vapour deposition (CVD) method using organic silanes, such as the methylchlorosilane family. The strength of such a body can be controlled by the amount of silicon/silicon alloy that is allowed to react with the graphite
**The infiltration of silicon alloys into the intermediate or pre-infiltrated body** is carried out by well-known methods. The infiltration may preferably be done outside of a mould for instance by melting solid silicon alloy, or by liquid silicon alloy feeding on an outer surface of an intermediate or pre-infiltrated body, by using differential vacuum infiltration techniques or by dipping the intermediate or pre-infiltrated body into liquid silicon alloy. There is also a possibility to apply the silicon alloy partly or fully by infiltration of vaporous silicon alloy, or by chemical methods, for instance by using techniques similar to sol-gel, chemical vapour deposition etc, followed by a high temperature reaction.

Infiltrating a silicon alloy into the intermediate body characterized in that said melt is silicon alloy comprising at least one metal from the group consisting of Ti, Zr, Hf, V, Nb, Ta, Cr, Mo, W, Mn, Re, Fe, Co, Ni, Cu, Ag, Al, or the element B or Ge. When referring to metals Germanium (Ge) is hereinafter considered as a metal. The heat treatment and infiltration of the diamond containing work-piece are performed at a pressure of less than 50 bars of an inert gas, preferably below 30 bars, and most cost efficient below 2 bars inert gas pressure or in vacuum. The infiltration is carried out at temperatures higher than the melting temperature of the melt, i.e. at temperatures higher than 1450°C for most of the silicon alloys or at temperatures higher than 1100°C when using alloys containing Al, Cu, Ag, Fe, Co, Ni, Mn, or Ge. The temperature of the infiltration should be kept less than 1700°C, preferably less than 1600°C.

It is possible to make silicon alloys with the mentioned alloy metals or boron or germanium, and to profit from the lower liquidus temperature of some alloys, which is an important advantage. The graphitization process is better controlled and these silicon alloys have moderate vapor pressure at temperatures in the interval 1100-1700°C. Finally, elements from the selected alloying elements form additional phases in the material which gives the diamond composite valuable properties. These phases can be metal carbides, metal silicides, metal alloys with silicon or ternary metal carbosilicides, or the corresponding phases of boron.

Good results are obtained when using silicon alloys, in which content of alloying element is as follows:
- from Ti, Zr, or Hf is less than 50 wt-%, preferably less than 20 wt-%.
- from V, Nb, or Ta is less than 20 wt-%, preferably less than 10 wt-%.
- from Cr and Re is less than 45 wt-%, preferably less than 20 wt-%.
- from Mo and W is less than 10 wt-%, preferably less than 5 wt-%.
- from Mn, Fe, Co, or Ni is less than 60 wt-%, preferably less than 20 wt-%.
- from Cu and Ag is less than 30 wt-%, preferably less than 15 wt-%.
- from Al and Ge is less than 50 wt-%, preferably less than 20 wt-%.
- from B is less than 20 wt-%, preferably less than 8 wt-%.

Infiltration of liquid silicon alloys into the intermediate body is performed by the most suitable methods, for example, by melting of the corresponding alloy directly onto the surface of the intermediate body, or, for example, by dipping of the intermediate body in the corresponding melt or, for example, by pouring of the corresponding melt onto surface of intermediate body. When using alloys it ensures simple infiltration process connected with the lower melting temperature of alloys compared with individual substances, better wetting of the intermediate body surface, a lower viscosity, and more easily achieved penetration into the pores of the intermediate body. As a result of infiltration a practically non-porous material comprising diamond, silicon carbide and additional phases, content of which is determined by the type of the used metals in the alloy, is produced. Such additional phases can be metal silicides (for example NiSi₂) and/or metal carbides (for example TiC and NbC) and /or alloys of metals (for example Ag) with silicon.

Content of metals (besides silicon) in the final dense diamond composite is less than 30 wt-%, preferably less than 20 wt-%. For some metals the content is naturally limited by the composition of the used silicon alloy employed and the maximum porosity of the initial work-piece. Thus, for metals from the group of V, Nb, or Ta their content in material is less than 10 wt-%, preferable less than 5 wt-%. For metals from the group of Mo and W their content in material is less than 5 wt-%. Finally, for the metals Fe, Co, and Ni the material content should preferably be less than 10 wt-%.

During the infiltration of silicon alloy, the chemical reaction of non-diamond carbon and silicon takes place resulting in the formation of silicon carbide, and the final body comprises also other phases of metal-silicon-carbon or boron-silicon-carbon. These metal-silicon-carbon or boron-silicon-carbon phases comprises silicon carbide, metal carbides, boron carbides, metal silicides, boron silicides, metal carbosilicides, alloys of metals with silicon and silicon. These phases form the matrix of the produced body.

A final body is the product of eventual additional treatment, mechanical or other, of the infiltrated body.

### Specifics about formation of carbon

Non-diamond carbon in the body may thus be achieved by the following different ways
1. Graphitization by heat treatment of the diamond particles in the work-piece to transform the surface layer of diamond to graphite.
2. If a strengthened body for machining purposes is needed, deposition of pyrolytic carbon into the body is useful. The pyrocarbon part of the total carbon needed is determined by the required strength for the machining operation.
3. During the heat treatment for the silicon alloy infiltration additional graphitization is made.
4. Eventual residual pyrolytic carbon from binders.

Thus, the determination of contributions to total amount of non-diamond carbon is made by
a) establishing the possible need for pyrocarbon.
b) establishing the degree of graphitization during the heat treatment for the silicon alloy infiltration.
c) establishing the amount of any residual pyrolytic carbon from binders.
d) primary graphitization makes up the additional carbon amount needed.
Note that when no pyrocarbon is needed, process steps 1 and 3 are merged.

Thus one feature of this invention is the ability to govern and vary the degree of diamond graphitization by simultaneous control of process and material parameters such as shape of the time-temperature curve, i.e. temperatures, holding times and heating rates, size, type and quality of and impurities in the diamond particles, the atmosphere and the pressure. Control considerations include e.g.:
1. The relative volume of silicon, alloying element and eventual silicides or alternatively residual pores, silicon carbide, any other carbides of the alloying elements used, and diamond in the final body depend upon the degree of graphitization which consequently has to be executed with precise control.
2. For submicron and small diamond particles it is important that the graphitization does not go so far that the particles disappear. The graphitization should be less than than 50 wt-% and preferably lie between 6-30 wt-%.
3. When mixing small diamond particles with large particles, the size of the small particles must be carefully chosen so that the small particles will not be totally graphitisized, unless so desired, and the large particles will be sufficiently graphitized. The graphitization should be less than 50 wt-% and preferably lie between 6-30 wt-%.
4. The predominant method of governing the degree of graphitization is to choose the right shape of the temperature-time curve from about 1000° up to about 1700°C, in vacuum or in inert gas at pressure preferably up to 2 bars, as a function of diamond particle size and quality.
5. For different desired degrees of graphitization, suitable for materials aimed at different technological applications, different shapes for these curves have to be chosen.
6. By choosing the correct heat treatment, it is possible to achieve a final body with very low porosity, no graphite and a well-balanced composition between diamond, silicon carbide and other carbides of alloying elements used, and metal silicide, alloying element carbosilicides and eventual silicon. If the graphitization degree is low the final composite will contain a larger amount of silicon, eventual metal silicide, alloying element carbosilicides and or porosity. The higher the degree of graphitization, the more silicon carbide and other carbides the final body will contain.

Generally an increase of the temperature and holding time increases the amount of graphite produced. The velocity of the graphitization front movement from the surface of a diamond particle into the diamond particle is determined also by the crystallographic direction and amount of material impurities and defects. When all other conditions are the same, the velocity of the graphitization front propagation will be the same for large and small diamond particles. However, the difference in particle size determines different relative graphitization degrees for large and small particles. The degree is significantly higher for small particles and is proportional to the specific area of the diamond. Thus it is important to choose optimal conditions of the heat-treatment in order to control the production of a material by the proposed method and it is of particular importance when using small diamond particles.

For small particles it is very important to accelerate the heating rate in the temperature area greater than about 1000°C, because the graphitization rate depends strongly on the temperature. Thereby the graphitization decreases (compared to slower heating to the same temperatures) and the degree of graphitization does not exceed the desired limit (≤ 50 wt.-%).

The process of graphitization is delicate to control and realise. It must be adjusted to the equipment and material that is used. Some of these parameters have to be empirically established to match the equipment and materials that are used.

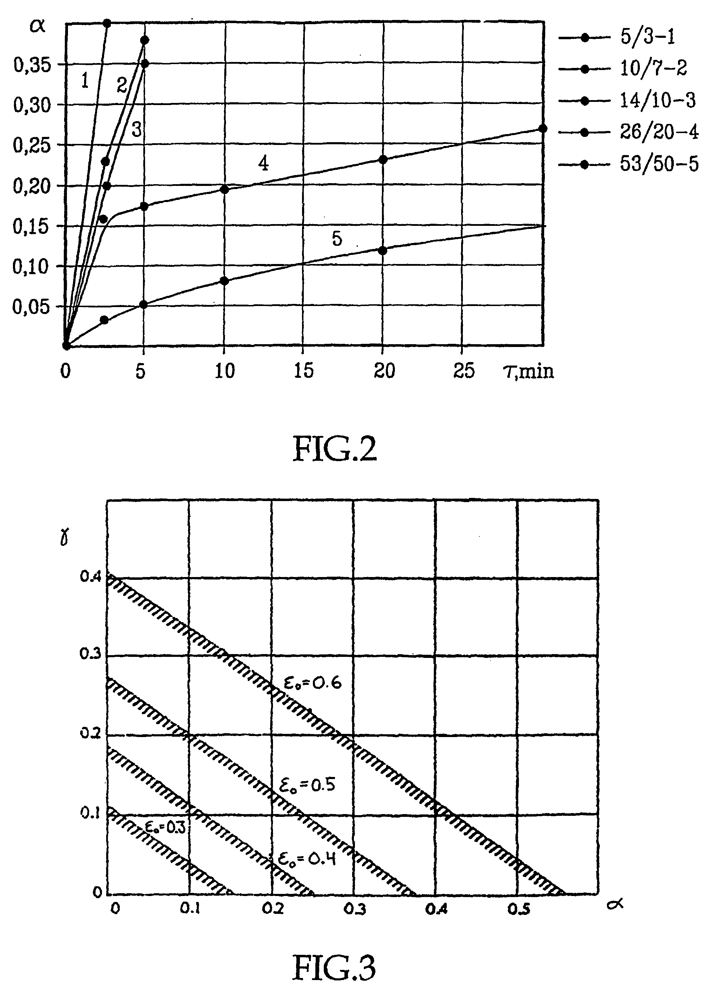

Figure 2 shows the degree of graphitization, α, versus the graphitization time, τ, at one specific temperature. As can be seen the relative graphitization of the particle is more rapid for smaller diamond particles (5/3, 10/7 and 14/10 µm) compared to larger particles (28/20 and 63/50).

One of the advantages with the graphitization process of the present invention is the improvement of the diamond surface. Generally the cost of diamonds is related to the quality and size. It is well known that the surface layer of most diamond particles has defects. Defects and impurities on the surface will reduce mechanical and chemical stability. It is desired not to have surface defects and impurities while still not using expensive, high quality diamonds. This is achieved by intentionally transforming the surface layer of the diamond to graphite by heat treatment. The graphitization starts on the surface, gradually propagating deeper into the particle. Furthermore not only the diamond surface may be improved by diamond graphitization but also the bulk properties. Diffusion processes start in the diamond when it is heated. By this diffusion process metallic and other impurities are moved to the surface of diamond and embedded in the silicon carbide and silicon or alternatively silicon carbide, any other carbide of alloying element, eventual silicide, alloying element and silicon. As the graphitization transforms the defective layer on the diamond surface it will result in improvement of the total particle properties and as a consequence, of the whole composite material. To achieve these improvements the graphite layer surrounding the diamond particle should be at least 50 nm, preferably thicker than 200 nm. The graphitization should not be less than 1 wt-% and preferably be at least 6 wt-%.

Another very important achievement of the diamond graphitization is the extremely strong bond of the formed carbide, coating each individual diamond particle. The diamond will be bonded to the matrix and in a demanding application it will not be pulled out.

During the total manufacturing process leading to a dense or near dense body with no graphite, certain criteria are established:
The porosity of the materials consists of pores of different size; larger pores and smaller pores. The preformed work-pieces have a certain volume percentage of porosity and certain pore sizes before the heat treatment and the silicon infiltration, determined by the diamond particle size and size distribution, by other materials that are present or added and eventual compacting of the green bodies.
The diamond content is decreasing corresponding to the amount of graphite that is formed during the graphitization of diamonds. The total amount of non-diamond carbon in the body, including added pyrocarbon or from possible residual of binder, must be controlled in order to achieve a final body with an optimum content of silicon carbide (produced in the reaction between the non-diamond carbon and the silicon) relative to other metal-silicon-carbon or boron-silicon-carbon phases, such as carbides of the alloying element, silicides of the alloying elements and eventually other carbosilicides.

The initial porosity and degree of graphitization influence the properties of the final body. At a work-piece porosity of greater than 60 vol.- %, the strength of the work-piece is insufficient for realisation of the subsequent steps of the process. When the porosity of a work-piece is less than 25 vol.-%, it is difficult to infiltrate silicon or silicon alloy into the intermediate body, and the final body will have significant residual porosity. The same problems appear if the graphitization degree is more than 50 wt-% or if the amount of deposited pyrocarbon and residual carbon from binders is more than 25 wt-%, because the limiting small pores will not be sufficiently large (due to too thick carbon layers). In such cases during silicon alloy infiltration, a dense layer of silicon carbide and other carbides or silicides of alloying element, is formed in the surface zone of the intermediate body, which blocks the penetration of liquid silicon alloy into internal parts of said intermediate body.

### USE OF PARAMETER VARIATIONS OF DIFFERENT KIND

Parameter variations may be applied to the material during various processing steps to control both final properties of the product and the manufacturing cost. The variation may be a successive change of a parameter, i.e. a gradient. Different combinations of gradients and/or parameter variations may be applied to the entire body or parts of the body.
The applied parameters are:
- diamond particle size
- diamond quality
- diamond bonding and diamond type
- porosity and pore sizes
- amount of metal-silicon-carbon or boron-silicon-carbon phases and silicon

Several of these parameters are dependent on each other. In the following examples set forth below, of controlling the final properties by the use of gradients and combinations thereof will be shown.

### Variation of the diamond particle size - Combination of diamonds of different sizes

The material according to the present invention may include not only one but several sizes of diamond particles. The use of diamonds of several sizes in the material gives it special characteristics. Large diamond particles provide the material with good abrasive properties (hereby referred to abrasive, wearing, cutting and other mechanical material removing properties). By combining large diamond particles with small in a homogeneous mixture, the lifetime of the tools will increase, compared to materials without small diamonds in the matrix, due to an increased wear resistance of the formed new matrix. Small diamond particles reinforce the composite. Being distributed throughout the whole matrix comprising phases of metal-silicon-carbon or boron-silicon-carbon, small diamond particles increase the Young's modulus, the thermal conductivity, the hardness, the wear resistance etc.

### Variation of the diamond particle size - Gradient of diamond sizes

Generally the drawback of producing materials with different diamond size or concentration in different parts of the body and that has been compacted together before silicon infiltration, is that there may be differences in physical/mechanical properties in the layers. These differences might cause unwanted stress situations at the interface and thereby weaken the composite.

By the method of the present invention it is possible to produce a material with prior specified distribution of diamond particles of successively changing size throughout the body volume, a size gradient material, with uniformly changing properties that will overcome or strongly decrease these above mentioned drawbacks.

A practical way of producing a composite with a gradient arrangement is, for instance, to form a body with three different parts in a mould. In the first part a mixture of particles with sizes A, B and C is used. The second part consists of particles with sizes A, C and D. The third part consist in turn of particles with sizes A, D and E. Diamond particles of size A are smallest. To have small diamonds (size A) throughout the body increases the strength of the matrix, i.e. material between the larger diamond particles. After being placed in the mould, these individual parts are vibrated, and then finally pressed together. The parts are then bonded by the graphitization, pyrocarbonization and during the silicon alloy infiltration. The smooth transition in particle size through the body volume will form a size gradient material and the small diamonds of size A will strengthen the matrix.

Advantages with a gradient arrangement is the possibility to enhance certain properties depending on the diamond particle size in desired parts in the material, for instance to increase the wear resistance in areas being exposed to wear. In addition the use of small diamonds is more economical than only to use large diamonds.

### Variations of the diamond quality

Diamonds of high quality are generally more expensive than diamonds of lower quality. The term quality is understood as something that varies with the following parameters; mechanical and optical properties, if it is well crystallised or not, defects like inclusions and cracks (mostly in the surface), shape, if they are synthetic or natural etc.

The material according to this invention may be produced by using cheaper diamonds of lower quality in those parts of the composite, which at application need less performance. Good quality diamonds are used to enhance the properties and the performance in critical areas. By this way it is possible to lower the total cost of diamonds. Additionally graphitization will improve the surface of diamonds of lower surface quality.

### Variations of the diamond type and the bonding of large diamonds

The material according to the present invention can be used for various fields of application, from tools for grinding, turning, milling, for instance, to applications where the material that is in contact with the composite is not aimed to be affected.

The present invention allows adjustment of the material to different fields of application by optimising the performance of the composite for each field. Due to its superior hardness, diamond is the component in the composite that is used for the main part of the work effort, therefore this adjustment may be done by altering the diamond parameters; type, particle size and concentration.

There are several types of diamond particles; from well crystallized blocky single crystals with sharp cutting edges to types consisting of different diamond layers on top of each other, e.g. onion-shaped, where each layer has cutting edges. The latter type is sometimes referred to as friable. These two types have significantly different properties and between these extremes there are a large variety of diamond types.

In other materials, for instance when used for grinding wheels, it is known that the chosen diamond type has a great influence on the properties of the grinding wheel. To adjust the properties in a proper way it is however necessary to adjust the bonding force of the diamonds to the diamond type used. In known grinding wheel materials it is difficult to achieve such detailed adjustment of the bond needed for optimal performance. Principally three different types of bonds are used for grinding wheels; resin bond, metal bond and vitreous bond.

By the method according to the invention there are good possibilities to make an adjustment of the bonding of larger diamonds (>20µm) and properties of the bonding matrix (here including small diamonds). A suitable hardness of the matrix can be chosen by varying the concentration of small diamonds of size < 20 µm, preferably < 10µm (0-50 vol.-%); silicon carbide (20-99 vol.-%) and other metal-silicon-carbon or boron-silicon-carbon phases (1-30 vol.-%) and thereby also the wear resistance of the matrix and the subsequent bond of the larger diamond particles.

It is possible to choose the hardness of the matrix within a range of about 20-63 GPa by varying the composition of the matrix; hardness of diamond is about 100 GPa, of silicon carbide about 25 GPa, of the metal carbides formed by the infiltration of silicon alloys about 15-25 GPa, of silicides about 8-13 GPa and of silicon and silicon alloys much less than 10 GPa. By this kind of adjustment the performance of our improved material is optimized for various applications.

A matrix hardness of 20-30 GPa is preferable for diamond types requiring a relatively weak bond; 50-63 GPa for diamond types that need a strong bond; and a hardness of 30-50 GPa for diamond types or mixtures requiring intermediate bonding strength.

### Variations of porosity and pore sizes in the work-piece - Gradient of porosity and pore sizes

By the present method it is possible to produce an intermediate body with different amount of porosity and various pore sizes throughout the body. By this method it is possible to produce a work-piece with total porosity ranging from 25 % to 60% and with pore sizes ranging with the size of the diamond particles.

The pore structure determines the extent to which it is possible to infiltrate silicon alloy so that all of the non-diamond carbon in the intermediate body is reacted with the silicon alloy. Too small pore sizes and also too little porosity, unsuitable distribution of pore channels, improper infiltration, and too poor wetting, too high viscosity of the silicon alloy **etc** may lead to blocking of infiltration because produced silicon carbide and any other carbide of the alloying elements prevent molten silicon alloy to penetrate the material further, throughout the whole body. Especially narrow pores are critical because they can easily be clogged, which will block and interrupt further infiltration.

This difficulty of the infiltration has earlier been one of the limitations for producing thick and large infiltrated bodies useful for such purposes as engineering details, structural components, load carrying devices such as bearings etc.

By distributing diamond particles of successively decreasing sizes from the surface of the green body towards the centre, a body with a pore size gradient is made. Pores of increasing sizes from the centre of the body towards the surface will facilitate the infiltration by allowing silicon alloy to penetrate the inner parts of the body by minimising the risk of blocking the infiltration near the surface zone. This build-up of the porosity makes possible to produce larger bodies than before. In addition, in the present method a controlled amount of carbon is located tightly around the diamond particles and is not located between the diamonds, which is advantageous when creating a suitable pore structure.

In practise the pore size gradient is easily achieved with the diamond size gradient and also by variation of the packing density of the diamonds in the green body, the diamond loading.

### Variation of the amounts and gradient structure of metal-silicon-carbon or boron-silicon-carbon phases and silicon

When using silicon alloys for the infiltration of intermediate bodies, as well as when using pure silicon, a silicon carbide matrix is formed, which tightly bonds diamond particles. The alloying element present in the alloy, i.e. metals or boron, provides the formation of new phases along with silicon or instead of it. Thus, such phases can be metal or boron carbides, metal or boron silicides, metal carbosilicides, eutectic alloys of metals or metal silicides with silicon. When the alloying elements react with carbon formed during graphitization, carbides are formed. Silicides are formed as a result of interaction of melt components.

The specific alloying element(s) used in the silicon melt determines the formed phases. Some elements form carbides, others silicides. Some elements form eutectic alloys with silicon. By controlling the content of elements in the alloy it is possible to increase or decrease the content of carbides, silicides and eutectic alloys in composition of final material. The hardness of the formed substances is known to increase according to the following: eutectic alloys < silicides < carbides. Thus, by changing the silicon alloy composition, it is possible to affect the matrix hardness of the produced composite material and its wear resistance. The use of silicon alloys comprising metals or boron, results in formation of a greater amount of additional phases. The presence of these additional phases may often give a fine grain structure. This greater number of interfaces is useful for the increase of mechanical properties of the material.

It is well known that the fracture toughness might increase in such a case. By careful control of the amount and the combination of alloying elements, favorable combinations of hardness and toughness can be achieved depending on the intended application.

A gradient of diamond particle size/pore size will result in a gradient of metal-silicon-carbon or boron-silicon-carbon phases in the final body.

### PREFORMING AND NEAR NET-SHAPE TECHNIQUE COMBINED WITH STRENGTHENING OF THE INTERMEDIATE BODY

By this method it is possible to produce bodies of various predetermined sizes and shapes. The bodies produced may be large and have complicated shapes, which will be illustrated in this section.

By using earlier known methods the forming of green bodies of carbon-coated or non-coated diamonds mixed with carbonaceous materials, is done in a temporary mould or same mould as the evaporation/decomposition of binders and silicon infiltration. A relatively large quantity of binders might be required for this forming, especially when using large diamond particles. The productive efficiency is decreased by requiring a mould for each green body when placed in a furnace. The consumption of moulds is high; the lifetime of the mould is decreased due to the high wear in the heat treatment processes. There might also be problems with the releasing of the composites from the moulds, e.g. graphite moulds are commonly used and during the liquid silicon infiltration step some silicon may react with the graphite and thereby cause problems of releasing of the body from the mould.

The preforming technique of the present invention is not restricted to the use of moulds, to the ability of producing moulds of complicated shapes or to the ability to release and take out an infiltrated body from the mould as is the case for some prior art methods. The forming of the green bodies according to the present invention is made by known techniques such as pressing in moulds, tape and slip casting, injection moulding etc. However, with the method of the present invention it is possible, but not necessary to use a mould during the forming step, heat treatment step or infiltration step. Preferably the heat-treatment and infiltration steps are done without using a mould. Still, for large batch production of complicated shapes it might be advantageous to use molds during the whole process.

During graphitization the diamond is transformed to graphite of lower density therefore requiring more volume. However, the process according to the present invention is characterised by constant shape and size throughout all the process steps from the forming of the green body/work-piece through the subsequent steps into a final product (except intentional machining of the intermediate body). The conclusion should be that the graphitization of the diamond particles affects the pores, i.e. the porosity changes in the intermediate body. Thus the method ensures size and shape congruity through the whole process. This near net-shaping technique provides for a waste-free production and makes possible to produce a final body of predetermined size and shape, thus the final body requires no machining except eventual finishing operations.

Fig.3 illustrates a linear change of the intermediate body porosity, ε, during graphitization versus the degree of graphitization, α, at different initial work-piece porosity.

Unless it is desirable to machine or execute additional shaping of the intermediate body i.e. if there are no special requirements on the shape, it is preferred to let the carbon be derived from the graphitization process.

The near net-shaping technique of our method is applicable to a great extent. Should however, machinability of the intermediate body be desirable in addition to the near net-shape technology, e.g. if the final body requires very complicated forms, pyrocarbon depositing or pre-infiltration of silicon or silicon alloy into the body is advantageous. The deposition leaves a firm body and gives the intermediate body excellent strength even without using any binders, which is not the case with an intermediate body comprising of diamond particles with only graphitized surfaces.

This makes possible to machine the intermediate body with relatively advanced methods, e.g. milling, turning and drilling, without breaking it. This enables much more complex shapes compared with those that are obtained just by forming of the green body/work-piece. Besides, this represents considerable cost savings also because machining of the final product is time consuming and difficult due to the high hardness and wear resistance.

In order to choose the best relation between the amount of carbon derived from the graphitization and pyrocarbon process an analysis of the required additional machining and of desired properties must be done. About 5-6 hours of heat treatment at about 850°C is required to deposit pyrocarbon into a green body with diamonds of 20/28 µm in an amount of 5 wt.-% of the total mass, at low pressure, while it only requires 3 minutes at 1550°C to transform about 15 wt-% of the diamond to graphite.

By this inventive method of using diamond graphitization or combining diamond graphitization with pyrocarbon deposition or pre-infiltration of silicon or silicon alloy, or the use of binder, it is possible to produce bodies of large sizes and of very complicated forms. Hollow bodies and bodies with holes and cavities may be produced by joining work-piece elements, before heat treatment and silicon infiltration. For instance, a hollow sphere may be produced by joining two hollow hemispheres, a hollow hexagon by joining six plates etc. This technique is very advantageous because it saves expensive diamond material and weight in the final body, and it enables one to produce hollow components suitable for different engineering purposes, while at the same time being spared from additional expensive and tedious machining of the final material. It is also possible to produce bodies with a cavity that fits to the shape and size of a shaft of a non-circular cross section. This shaft is then fitted into the final composite body, eventually together with an adhesive to adhere the shaft to the composite. Thick and large bodies may also be produced by using pore size gradients facilitating the infiltration of the silicon alloy, as described above.

Furthermore when producing a composite body, pyrocarbon deposition may be used in preparation for machining to such shapes that would not have been possible with mould pressing, without breaking the mould or e.g. using a mould that can be divided.

It is obvious that there is a possibility to produce large bodies by stacking several intermediate bodies upon each other with a silicon layer or a silicon alloy layer in between. This might lead to inhomogeneous mixtures, inhomogeneous infiltration, shrinkage of the body and problems of shape stability. Therefore our method is preferred.

It is also possible to combine intentional graphitization and addition of carbonaceous materials from the beginning, for instance by adding a larger amount of binder from the beginning, but the method according to the present invention is the preferred. Tests with mixing diamonds together with carbonaceous materials like carbon black and carbon fibres, and binders like paraffin and epoxy resins, were made. The results from these tests showed that the work-pieces and the samples after silicon infiltration had cracks and breaches and also showed changes in shape.

### ADVANTAGES WITH THE PROCESS AND MATERIAL ACCORDING TO THE PRESENT INVENTION

One of the great advantages of the present invention is that the process parameters can be varied to accomplish the desired diamond graphitization in the work-piece to provide optimal conditions for the production of a polycrystalline body of predetermined desired shapes and sizes, having desired strength, physical and mechanical properties. In comparison with methods where carbon-coated or non-coated diamonds are mixed with carbonaceous materials for production of diamond composites, the proposed method using graphitization and when required, pyrocarbon deposition or pre-infiltration of silicon/silicon alloy, has several advantages, including:
1. During diamond graphitization the graphite is formed directly on the surface of all diamond particles and during the optional deposition of pyrocarbon directly on graphitizised diamonds. Therefore the carbon is tightly in contact with the surface. Thus, graphitization of diamond with or without deposited pyrocarbon avoids the various problems associated with physically mixing in carbonaceous materials as the source of carbon. These problems include non-uniform distribution of carbon, incomplete reaction with silicon, agglomerates of added particles blocking pores, and inhomogeneities due to different size, shape and density of the mixed materials.
2. The carbon layer is in tight contact with the diamond surface by the diamond transformation into graphite and by optional deposition of pyrocarbon onto the body. This tight contact guarantees the formation of silicon carbide, and any other carbides of alloying elements directly on the surface of the diamond particles thus forming a diamond-matrix interface of high adhesion i.e. the diamonds are tightly bonded to the matrix. The properties are improved due to the strong adhesion of both small and large diamonds. The diamonds will not chip out from the matrix so easily while used in different applications. The material is extremely wear resistant.
3. Heat treatment of the eventual binder and graphitization can be accomplished using the same equipment as for silicon or silicon alloy infiltration (when pyrocarbon deposition is not used). Thus these process steps can be realised step by step in the same furnace resulting in decreased overall time for producing the final material.
4. The graphitization, transforms defective layers on the diamond surface, resulting in improvement of the particle properties and as a consequence, of the whole composite material for instance regarding the thermal stability.
5. The graphitization will provide for fast and proper carbon formation in the whole body volume, starting from the surface of the diamond, expanding linearly. Only a relatively small amount of diamond is transformed. Thus when producing very thick and large bodies, the graphitization is advantageous due to the ability to form carbon even in deeper parts of the body without risk of blocking the pores for the subsequent infiltration.
6. The process can give various different complicated shapes due to near net-shape techniques and the ability to machine the intermediate body with advanced methods due to the pyrocarbon deposition or pre-infiltration of silicon/silicon alloy. The shape and size of the final body is not restricted to moulding techniques, which leads to cost advantages by not being restricted to forming techniques by the use of moulds and by avoiding the expensive use of mould during the heat treatment and infiltration steps. Furthermore, there will not be problems with releasing the bodies from the mould.
7. The process gives significant cost advantages due to the fact that a great number of bodies may be produced in one batch, the main method to produce carbon, graphitization of diamond, is a fast method not requiring any gas, and low pressures are used. Due to the machinability of strong intermediate bodies, tedious and expensive machining of the final body may be avoided. If no additional machining is needed, the process is a "one step process" where the graphitization of diamond is performed during the temperature raise before the infiltration. There is no need of using moulds otherwise than for, in some cases forming. Due to the near net-shaping, no or very little finishing and machining of the final product is needed, which reduces the costs further. Diamonds with a relatively lower price may be used.

The material according to the present invention holds several advantages:
The versatility of the process is unique. The process parameters can be varied to give the material desired properties. With this method it is possible to produce not only materials of good wear resistance and with improved performance for abrasive, grinding and other mechanical removing operations but also for structural and engineering purposes, load bearing materials etc.

One feature of the invention is that the proposed material is characterised by allowing the combination of different excellent properties simultaneously and to matching such properties that correspond best to the various intended applications. Controllable properties are, for instance, the E-modulus, hardness, strength, electrical conductivity, thermal shock resistance, thermal conductivity. Thus it is possible to achieve
1. A high Young's modulus and sufficient strength in combination with low density.
2. High hardness and high bonding strength of the diamonds that result in excellent abrasion and erosion wear resistance.
3. Maintenance of mechanical properties after exposure to temperatures up to 1500°C, in vacuum.

When mixing together small and large diamond particles, two facts affect the material properties; the high adhesion between the diamond particles and the matrix, and the high wear resistance of the matrix due to small diamonds distributed therein. Large diamond particles will drop out from the material if the bond to the matrix is insufficient or the matrix has low wear resistance. Small diamond particles reinforce the matrix, giving it high wear resistance and increased rigidity, strength, and thermal conductivity. All this improves significantly the abrasive (wearing, cutting and other mechanical material removing operations) properties of the materials: increased thermal conductivity decreases the temperature in the working area of diamond particles. Increased rigidity of final bodies will prolong the lifetime of the composite tool when used for high precision machining.

### EXAMPLES OF METHOD REALISATION AND MATERIAL PROPERTIES

The following different diamond types were used for preparation of samples, which were tested: ACM 5/3 synthetic diamond particles (size range 3-5 µm), ACM 10/7 synthetic diamond particles (size range 7-10 µm), ACM 14/10 synthetic diamond particles (size range 10-14 µm), ACM 28/20 synthetic diamond particles (size range 20-28 µm), ACM 63/50 synthetic diamond particles (size range 50-63µm), all from Superhard Materials Institute, Kiev, Ukraine.

### Example A:

1. A mixture is formed of diamond micro-powder of the type ACM 28/20 and a binder - 25 % alcohol solution of phenol formaldehyde resin - in an amount of 2 wt-% dry resin of the mass of diamond powder. The mixture is stirred thoroughly and sieved through a screen with mesh size of 200 µm.
2. Forming of bars of length 50 mm with rectangular cross section area 6x5 mm is made by pressing using metallic moulds, with a force of 45 kN at room temperature.
3. The green bodies are removed from the mould, kept at room temperature in air for 10 hours, subsequently dried at 70°C for 1 hour and hardened at 150°C for 1 hour. The produced work-pieces contain 98 wt-% of diamond (56 vol.- %) and has a porosity of 41 vol-%.
4. Heat treatment of the samples is done in vacuum (pressure 0.1 mmHg) at 1550°C. Sample no 1 was heated 3 minutes, sample no 2 was heated 10 minutes, sample no 3 for 20 minutes and sample no 4 heated 30 minutes.
5. Infiltration is done by melted silicon on the surfaces of the intermediate bodies at 1550°C.

Additionally samples 5-7 were formed (5x6x50mm) of diamond powders using a temporary binder. Sample no 5 is produced from diamond powder ACM 10/7, sample 6 from a mixture of diamond powders ACM 63/50 and ACM 14/10 and sample 7 from a mixture of diamond powders ACM 63/50 and ACM 10/7. The work-pieces were heat treated at 1550°C in vacuum and then infiltrated by liquid silicon.

Table of the properties of the as-fabricated samples:

| **Samples** | | | | **Content, vol%** | | | **Properties** |
|---|---|---|---|---|---|---|---|
| **No** | **Initial material** | **Heat treatment [min]** | **Diamond content decrease [wt-%]** | **D** | **SiC** | **Si** | **E-modulus [GPa]** |
| 1 | ACM 28/20 | 3 | 16 | 47 | 32 | 21 | 550 |
| 2 | ACM 28/20 | 10 | 19 | 46 | 39 | 15 | 580 |
| 3 | ACM 28/20 | 20 | 22.5 | 43 | 45 | 12 | 580 |
| 4 | ACM 28/20 | 30 | 25 | 41 | 49 | 10 | 580 |
| 5 | ACM 10/7 | 3 | 23 | 45 | 50 | 5 | 638 |
| 6 | 60 wt% 63/50 40wt% 14/10 | 3 | 8 | 65 | 21 | 14 | 660 |
| 7 | 60 wt% 63/50 40 wt% 10/7 | 3 | 12 | 62 | 31 | 7 | 718 |

As can be seen, the E-modulus may be varied over a wide range. By changing the small diamonds ACM 14/10 in sample 6 to even smaller diamonds ACM 10/7 in sample 7, it is possible to increase the E-modulus even more.

### Example B:

Sample no 1 is produced of diamond powder ACM 10/7, sample no 2 is produced of diamond powder ACM 14/10, sample no 3 from diamond powder ACM 28/20 and sample no 4 from a mixture of diamond powders ACM 63/50 and ACM 10/7. Bars were formed of size 5x6x50 mm from the diamond powders using a temporary binder. The work-pieces were heat treated at 1550°C in vacuum and then infiltrated by liquid silicon. The Young's modulus was measured.

Table of the properties of the as-fabricated samples:

| **Samples** | | **Final content** | **Properties** |
|---|---|---|---|
| **No** | **Initial diamond powder** | **Material composition [vol -%]** | **Young's modulus [GPa]** |
| 1 | 10/7 | Diamond 46 SiC 47 Si 7 | 630 |
| 2 | 14/10 | Diamond 46 SiC 42 Si 12 | 580 |
| 3 | 28/20 | Diamond 49 SiC 31 Si 20 | 560 |
| 4 | 60 wt% 63/50 40 wt% 10/7 | Diamond 62 SiC 31 Si 7 | 718 |

### Example C:

Sample 1 is made of diamond powder ACM 14/10 and sample 2 of ACM 28/20. Sample 3 is made of a mixture of diamond powders ACM 63/50 and ACM 10/7. Sample 4 is made of a mixture of diamond powder ACM 63/50 and ACM 28/20. The samples were made as circular plates: (Ø=20mm, h=2mm).

Table of the properties of the as-fabricated samples:

| **Sample** | **Initial diamond powder** | **Material composition [vol %]** | **Density [kg/m**^{**3**}**]** | **σ** _{**bend biaxial**} **[Mpa]** |
|---|---|---|---|---|
| 1 | 14/10 | Diamond 46 SiC 42 Si 12 | 3250 | 260 |
| 2 | 28/20 | Diamond 49 SiC 32 Si 19 | 3190 | 115 |
| 3 | 90 wt-% 63/50 10wt-% 10/7 | Diamond 58 SiC 14 Si 28 | 3140 | 125 |
| 4 | 80 wt-% 63/50 20 wt-% 28/20 | Diamond 57 SiC 14 Si 29 | 3120 | 136 |

The table shows that the as-fabricated plates of the material have sufficient bending strength for applications as a construction material, for instance.

### Example D:

Sample 1 is made of ACM 5/3 diamond powder and sample no 2 is made of ACM 10/7. Bars were formed of size 12×12×5 mm from the diamond powders using a temporary binder. The work-pieces were heat treated at 1550°C in vacuum and then infiltrated by liquid silicon. Before testing the samples were ground and polished by a standard technique for hardness measurements. Flat samples were obtained, but they were not fully polished because the material was extremely hard.

Vickers hardness of a selected area was measured using Microhardness tester MXT-α1. The standard formula for Vickers hardness calculation: Hv = 0.47P / *a*² (Equation 1), where P is the load and *a* is the half length of the indent diagonal. Knoop hardness of a random area was measured using INSTRON 8561 and calculated directly by: Hₖ = P / S (Equation 2), where P is the load and S is the projected area. According to the design of Knoop indenter, the ratio of the long diagonal to the short diagonal is 7:1. Here the ratio of the long diagonal to the short diagonal in the indent was almost 10:1, indicating that the cutting tools have high elastic modulus.

Table of Vickers hardness of diamond/SiC/Si cutting tools:

| **Materials** | **Load (N)** | **2*a (µm)*** | **H**_{**v**} **(GPa)** | **Indent Place** |
|---|---|---|---|---|
| Sample 1 5/3 µm | 5 | 17 | 32.5 | Between diamond particles |
| | 20 | 30.8 | 39.6 | Between diamond particles |
| | 20 | 32.3 | 36.0 | Between diamond particles |
| | 20 | 29 | 44.7 | Between diamond particles |
| | 20 | 23.9 | 65.8 | Diamond particles |
| | 20 | 28.3 | 47.0 | Diamond particles |
| | 20 | 26 | 55.6 | Diamond particles |
| Sample 2 10/7 µm | 20 | 34.5 | 31.6 | Between diamond particles |
| | 20 | 33 | 34.5 | Between diamond particles |
| | 20 | 33.5 | 33.5 | Between diamond particles |
| | 20 | 28.5 | 46.3 | Between diamond particles |
| | 20 | 25.5 | 57.8 | Diamond particles |
| | 20 | 27 | 51.6 | Diamond particles |
| | 20 | 25.8 | 56.5 | Diamond particles |
| | 20 | 27 | 51.6 | Diamond particles |

Table of Knoop hardness of diamond/SiC/Si cutting tools:

| **Samples** | **Load (N)** | **Long diagonal (µm)** | **Short diagonal (µm)** | **H**_{**k**} **(GPa)** |
|---|---|---|---|---|
| Sample 1 5/3 µm | 20 | 82.9 | 8.5 | 56.8 |
| | 20 | 84.1 | 8.5 | 56.0 |
| | 30 | 125 | 13 | 36.9 |
| | 30 | 114.9 | 12.1 | 43.2 |
| Sample 2 10/7 µm | 20 | 84.2 | 7.9 | 60.1 |
| | 20 | 86.4 | 8.1 | 57.2 |

It can be concluded from the tables that the Vickers hardness of the microstructure depends on the measured area. The Vickers hardness in the area between the diamonds was 30-40 GPa, and in the diamond particle area 50-60 GPa, i.e. the micro-zones are very hard.

As seen from the table there are some differences between the Knoop hardness of sample 1 and sample 2, 37-57 and 57-60 GPa respectively. The smaller diamonds are graphitizised faster wich reduces the relative diamond content in sample 1 more than in sample 2. This shows the importance of choosing correct size of diamonds. The overall material hardness reflected by the Knoop hardness measurements show that the composites belongs to the group of superhard materials (>40 GPa). All measurements showed good repetition.

Table of typically reported ranges of Knoop hardness for some materials

| **Material** | **Knoop hardness [GPa]*** |
|---|---|
| Diamond particles | 80-120 |
| Polycrystalline diamond, PCD/PDC | 65-80 |
| Cubic boron nitride, CBN | 35-45 |
| Boron carbide | 25-35 |
| Aluminium oxide | 15-22 |
| Silicon carbide | 21-30 |
| Tungsten carbide | 17-22 |

| | |
|---|---|
| *) Depending on the crystallographic direction. | |

### Example 1:

The following process steps were used to produce samples of three different types of diamond micro-powders; ACM 10/7 was used for sample 1, ACM 14/10 was used for sample 2, and ACM 63/50 was used for sample 3:
1. A mixture is formed of the diamond micro-powder and a binder - 25 % alcohol solution of phenol formaldehyde resin - in an amount of 2 wt-% dry resin of the mass of diamond powder. The mixture is stirred thoroughly and sieved through a screen with mesh size of 200 µm.
2. Forming of a tablet of diameter 20 mm and thickness 2 mm is made by pressing using metallic moulds, with a force of 45 kN at room temperature.
3. The green body is removed from the mould, kept at room temperature in air for 10 hours, subsequently dried at 70°C for 1 hour and hardened at 150°C for 1 hour. The produced work-pieces contains 98 wt-% (51 vol.- %) of diamond; and has a porosity of 48 vol-% (sample no 1); 47 vol-% (sample no 2); and 44 vol-% (sample no 3).
4. Heat treatment of the samples is done in vacuum (pressure 0.1 mmHg = 13,3 Pa) at 1550°C. The samples were heated 4 minutes and the diamond content decrease was 21% for sample no 1, 24% for sample no 2, and 4% for sample no 3.
5. Infiltration of intermediate bodies is done by melt containing 94 wt-% Si and 6 wt-% B, at temperature of 1550°C.

Properties of the produced samples are given in the table.

| no | Infiltrating alloy | Precursor material | Biaxial strength | Vicker's hardness | Knoop hardness |
|---|---|---|---|---|---|
| 1 | Si-B | ACM 10/7 | 265 | 31 | - |
| 2 | Si-B | ACM 14/10 | 166 | 34 | 34 |
| 3 | Si-B | ACM 63/50 | 113 | - | - |

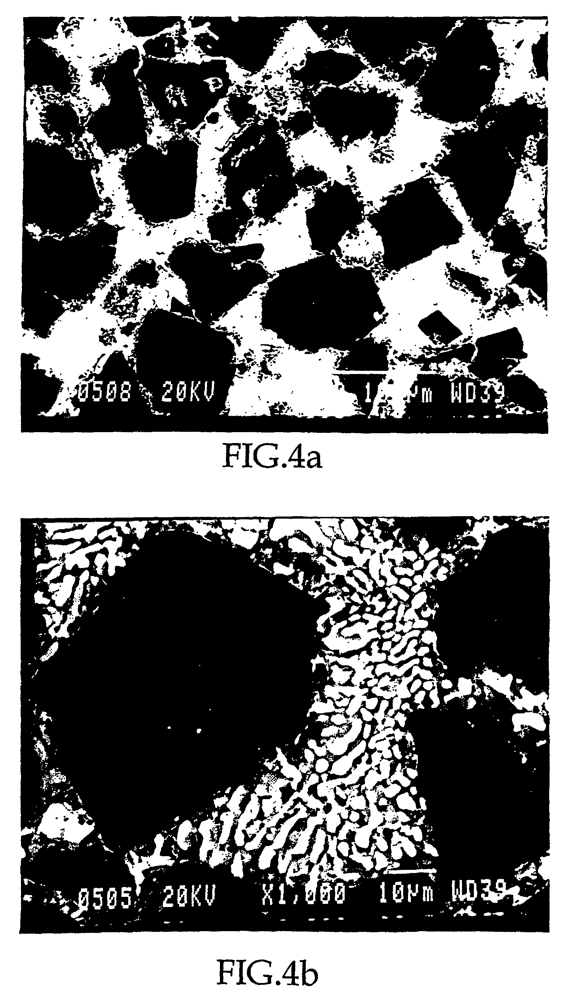

Fig. 4a. shows a back-scatter SEM picture of a polished surface of sample 3 (350 x). Grey areas around diamond particles (dark) in the picture illustrate B-rich areas, consisting most probably of boron carbide, and white areas illustrate the SiC phase.

### Example 2:

Example 2 was performed analogously to the Example 1, producing samples of similar type. The difference of the method realization was in infiltration of intermediate body by the alloy of 84 wt-% Si and 16 wt-% Ti, at 1550°C. Properties of the produced samples are given in the table.

| no | Infiltrating alloy | Precursor material | Biaxial strength | Vicker's hardness | Knoop hardness |
|---|---|---|---|---|---|
| 4 | Si-Ti | ACM 14/10 | 228 | 51 | 46 |
| 5 | Si-Ti | ACM 63/50 | 162 | - | - |

Fig. 4b. shows a back-scatter SEM picture of the polished surface of sample 5 (1000×). White areas are Ti-rich islands in a grey SiC matrix surrounding the dark diamond particles. The location of the Ti-rich phase, having some distance from the diamond particles, and the co-structure (similar to an eutectic structure) between SiC and Ti-rich phase suggested that the Ti-rich phase could be titanium silicide (TiSi₂).

### Example 3:

Example 3 was performed analogously to Examples 1-2. Infiltration was carried out by the alloy of 77 wt-% Si and 23 wt-% Cu, at 1450°C. Properties of the produced samples are given in the table.

| no | Infiltrating alloy | Precursor material | Biaxial strength | Vicker's hardness | Knoop hardness |
|---|---|---|---|---|---|
| 6 | Si-Cu | ACM 10/7 | 225 | 33 | - |
| 7 | Si-Cu | ACM 14/10 | 173 | 45 | 49 |
| 8 | Si-Cu | ACM 63/50 | 148 | - | - |

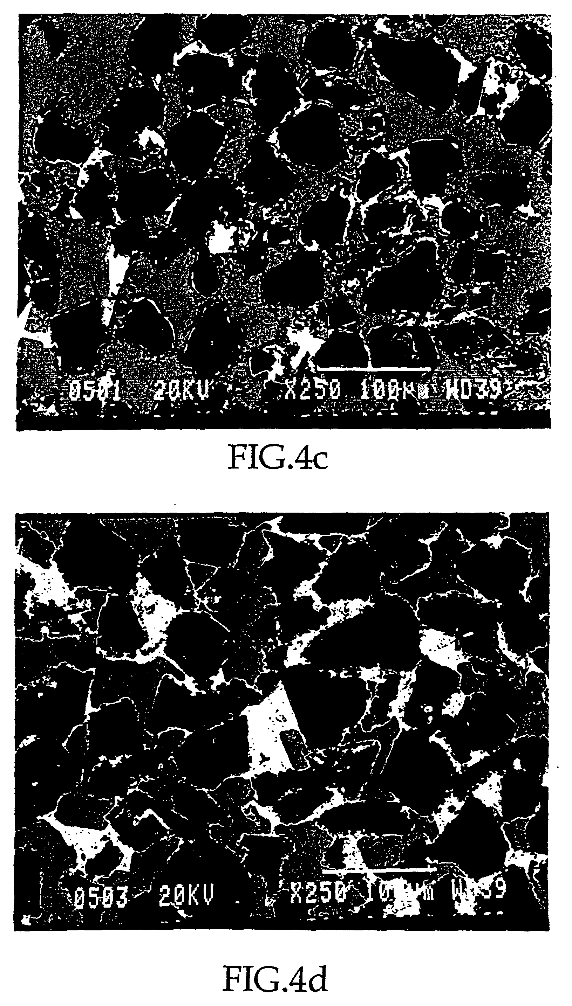

Fig. 4c. shows a back-scatter SEM picture of the polished surface of sample 8 (250×). Pure Cu can be seen as white areas around dark diamond particles and inside dark gray SiC. Cu shows a tendency of accumulating around diamond particles, probably due to the fine wetting property of liquid Cu to diamond.

### Example 4:

Example 4 was performed analogously to Examples 1-2. Infiltration was carried out by the alloy of 77 wt-% Si and 23 wt-% Ni, at 1450°C. Properties of the produced samples are given in the table.

| no | Infiltrating alloy | Precursor material | Biaxial strength | Vicker's hardness | Knoop hardness |
|---|---|---|---|---|---|
| 9 | Si-Ni | ACM 10/7 | 200 | 39 | - |
| 10 | Si-Ni | ACM 14/10 | 297 | - | 35 |
| 11 | Si-Ni | ACM 63/50 | 136 | - | - |

Fig. 4d. shows a back-scatter SEM picture of the polished surface of sample 11 (250×). Almost the same phenomenon as above could be observed in samples with Ni content. Dark diamond particles are covered by a white Ni-rich phase.

### Example 5: Measurement of the thermal stability and E-modulus:

Three samples, no 12-14, were produced from a mixture of diamond powders ACM 63/50 (60 wt%) and ACM 14/10 (40 wt%). Bars of size 5x6x50 mm were formed from the diamond powders using a temporary binder. The work-pieces were heat treated at 1550°C in vacuum and then infiltrated by liquid silicon alloy. Sample no 12 was infiltrated with a silicon-boron alloy, sample no 13 with a silicon-titanium alloy, and sample no 14 with a silicon-copper alloy.

The Young's modulus was measured of the as received bars.
The thermal stability was measured for sample no 12 by measuring the E-modulus at roomtemperature, after heating of the sample in vacuum at 1500°C during 15 minutes. Also the sample shape was observed after heat treatment. The shape of the sample was unchanged and there were no cracks.

Table of the properties of the as-fabricated samples:

| **Samples** | | | **Properties** | |
|---|---|---|---|---|
| **No** | **Initial diamond powder** | **Silicon alloy used for infiltration** | **Young's modulus [GPa]** | **Thermal stability** |
| | | | | Young's modulus |
| 12 | 60 wt% 63/50 40 wt% 14/10 | Si-B | 631 | 622 |
| 13 | 60 wt% 63/50 40 wt% 14/10 | Si-Ti | 634 | - |
| 14 | 60 wt% 63/50 40 wt% 14/10 | Si-Cu | 618 | - |

As seen from these examples above, the using of silicon alloys as infiltrant will provide for the possibility of producing materials with modification of mechanical properties compared to materials infiltrated with pure silicon.

### EXAMPLES OF FIELDS OF APPLICATION

The composite material made according to the present invention is advantageous for applications where the combination of different superior properties are needed:

The stated properties make the proposed material valuable for such applications as fine instrument-making, including devices which operate under rapid thermal cycles, wear resistant products for mechanical engineering (nozzles for sand-blasting machines, products for mud pumps) size-stable supports for devices etc. At operations with impacts, for instance milling and turning of unsymmetrical objects and at operations where the composite tool is exposed to vibrations there are higher requirements placed on the material regarding the toughness. At punching operations the hardness and the wear resistance of the material is important. A high E-modulus gives mechanical stability at applications requiring size accuracy.

A high thermal conductivity of the composite tool is important at operations where a lot of frictional heat is produced in the contact area,

At such applications where the material being in contact with the composite is aimed to be unchanged, for instance when used as bearings or similar, size gradient materials are useful. The area near the contact zone should have diamond sizes giving the highest possible wear resistance and the rest of the composite sizes giving the optimal mechanical properties, strength and toughness. Another interesting application field is sawing and turning of wood and stone etc. where a high abrasive ability is combined with sufficient toughness.

Yet another application is dressing pencils and bars replacing single-crystal diamond dressing tools, diamond needles, and tools intended for shape dressing of grinding disks of complex profiles. It is also possible to produce drills; saw components for machining of concrete, granite, marble; other construction materials and machining tools.

The composite material produced according to the present invention is also suitable to use as substrates for growing diamond films. It is possible to grown diamond films on composite materials for a number of wear-parts applications. The film thickness should be larger than 3 µm, preferably larger than 10 µm, in most abrasive applications. Such coated composites will be especially useful in cutting-tools and bearings, where polished surfaces can be obtained with standard techniques such as rotating hot iron- or steel-wheels. The extraordinary good performance is a combination of the diamond coating and the strong, wear-resistant composite. A locally abrasive damage through the diamond coating will not cause any drastic or catastrophic change of the good properties of the component.

Another possible application field of the composite material is using it as abrasive grains. The abrasive grains of the diamond-composite material are produced according to the method of PCT application no PCT/EP98/05579, filed Sept 3, 1998.

### METHOD SPECIFICATIONS

The properties of the claimed material was determined by the following methods.

**Density** was determined by a hydrostatic weighing method, based on determination of sample mass in air and in water. Apparent density, which is a ratio of porous body mass (m₁) to a volume of space occupied by it, including volume of all pores in the material, is determined by the formula: ρ=m₁xρ_{H2O}/(m₂-m₃), m₂: mass of sample saturated with water, m₃: mass of weights balancing the sample saturated with water when weighing it in water, g, ρ_{H2O} - density of water, kg/m³.
**Thermal conductivity** was measured with calorimeter using samples of Ø=15 mm and height=10 mm having radial openings at different heights for the placing thermocouples. Thermal conductivity was calculated as a ratio of thermal resistance to a distance between thermocouples. The thermal resistance was determined as the temperature drop of samples at steady-state thermal flow through it. The calculations were made taking in account of corresponding constants of the device. The certified measurement error is ±10 %.
**Biaxial bending** test is a ring-on-ring test where the loading fixture consist basically of two concentric rings. The stress field is biaxial with principal directions in the radial and tangential directions. The biaxial strength (σbiax) of four samples was calculated by: σ_{biax} = 3P/4πt² [2(1+ν)ln(rₛ/rₗ) + (1-ν)(rₛ²-rₗ²)/R²] where P is fracture load (N), t is sample thickness (mm), ν is the Poisson's ratio (0.2), rₛ is radius of the support ring (7 mm), R is radius of the sample, rₗ is radius of the loading ring (3.13 mm).
**Young's modulus** is measured in the direction of axis of a sample with length 50 mm and cross-section 5x6 mm by exciting and recording of resonance frequencies of longitudinal oscillations of the sample at room temperature. Young's modulus is calculated by the formula: E=(ρ/k₄)x(2lxf₄/4)², where E is dynamic Young's modulus, Pa, 1 is length of sample (0.05 m) k₄ is the correction factor equal to 0.98, ρ is the density of material, kg/m³, f₄ is resonance frequency, Hz, which corresponds to 3^{rd} ober-tone (usually - 500-600 kHz)
**Microstructure** of the produced materials was examined in a JSM-840 scanning electron microscope.

## Claims

1. A low-pressure method for manufacturing a diamond composite from diamond particles, comprising the steps of forming a work piece having a predetermined size and shape, heating the work piece and controlling the heating temperature and heating time so that a certain desired amount of graphite is created by graphitization of diamond particles, thereby creating an intermediate body, and infiltrating silicon alloy into the intermediate body, thereby creating a final body having the same predetermined size and shape as the work piece in a macroscopic scale.

2. The method according to Claim 1, wherein the method steps are performed under a pressure below 50 bars, preferably below 30 bars, and more preferably below 2 bars.

3. The method according to Claim 1 or 2, wherein the amount of graphite created by graphitization is 1-50 wt-%, preferably 6-30 wt-% of the amount of diamond.

4. The method according to any one of Claims 1-3, wherein the heating temperature during graphitization is lower than 1900°C, preferably lower than 1700°C.

5. The method according to Claim 4, wherein the heating temperature and heating time needed for the graphitization is empirically determined for the heating equipment used.

6. The method according to any one of Claims 1- 5, wherein the work piece is formed with a porosity of 25-60 vol-%.

7. The method according to any one of Claims 1-6, wherein a certain amount of carbon is deposited in the work piece by exposing it to a gaseous hydrocarbon or gaseous hydrocarbons at a temperature exceeding the decomposition temperature for hydrocarbon or hydrocarbons.

8. The method according to Claim 7, wherein at least some graphitization of the diamond crystals is done before exposing the work piece to a gaseous hydrocarbon or gaseous hydrocarbons at a temperature exceeding the decomposition temperature for hydrocarbon or hydrocarbons.

9. The method according to Claim 7 or 8, wherein the intermediate body is machined into the desired shape and size of the final body before the step of infiltration of liquid silicon alloy.

10. The method according to Claim 1 or 2, wherein the intermediate body is heated in the presence of vaporous silicon or silicon alloy and then machined into the desired shape and size of the final body before the step of infiltration of liquid silicon alloy.

11. The method according to any one of Claims 1-10, wherein the work piece is formed with a non-uniform distribution of diamond particles with various sizes and qualities.

12. The method according to any one of Claims 1-10, wherein the work piece is formed from a homogeneous mixture of diamond particles of various sizes eventually with the addition of a binder.

13. The method according to any one of Claims 1-10, wherein the diamond particles in the work piece are distributed in successively decreasing sizes from the surface of the work piece towards the centre thereof.

14. The method according to any one of Claims 1-13, wherein two or more work pieces are made separately and thereafter being brought together before the heat treatment and the infiltration steps.

15. The method according to any one of Claims 1-8 and 11-14, wherein the forming of the work piece is made in a mould, the heat treatment and the infiltration of silicon alloy being made after the work piece has been taken out of the mould.

16. The method according to any of Claims 1-15, wherein a silicon alloy comprising at least one element from the group consisting of metals Ti, Zr, Hf, V, Nb, Ta, Cr, Mo, W, Mn, Re, Co, Ni, Cu, Ag, Al, and the elements B and Ge, is infiltrated into the intermediate body.

17. The method according to Claim 16, wherein the silicon alloy contains Ti, Zr, and/or Hf to a content of less than 50 wt-%, preferably less than 20 wt-%.

18. The method according to Claim 16, wherein the silicon alloy contains V, Nb, and/or Ta to a content of less than 20 wt-%, preferably less than 10 wt-%.

19. The method according to Claim 16, wherein the silicon alloy contains Cr and/or Re to a content of less than 45 wt-%, preferably less than 20 wt-%.

20. The method according to Claim 16, wherein the silicon alloy contains Mo and/or W to a content of less than 10 wt-%, preferably less than 5 wt-%.

21. The method according to Claim 16, wherein the silicon alloy contains Mn, Fe, Co and/or Ni to a content of less than 60 wt-%, preferably less than 20 wt-%.

22. The method according to Claim 16, wherein the silicon alloy contains Cu and/or Ag to a content of less than 30 wt-%, preferably less than 15 wt-%.

23. The method according to Claim 16, wherein the silicon alloy contains Al and/or Ge to a content of less than 50 wt-%, preferably less than 20 wt-%.

24. The method according to Claim 16, wherein the silicon alloy contains B to a content of less than 20 wt-%, preferably less than 8 wt-%.,

25. A body manufactured by the method according to Claim 1, in which diamond particles are bonded to a matrix of metal-silicon-carbon or boron-silicon-carbon phases, said body comprising at least 20 vol-% of diamond particles, at least 25 vol-% of metal-silicon-carbon or boron-silicon-carbon phases, preferably more than 35 vol-% of metal-silicon-carbon or boron-silicon-carbon phases, the Young's modulus exceeding 450 GPa.

26. A body according to Claim 25, said body comprising at least 29 vol-% of diamond particles, at least 34 vol-% of metal-silicon-carbon or boron-silicon-carbon phases, the Young's modulus exceeding 540 GPa.

27. A body according to Claim 25, wherein said body comprises at least 46 vol-% of diamond particles having sizes of about 30 µm at the most, the Young's modulus exceeding 560 GPa.

28. A body according to Claim 25, wherein said body comprises at least 54 vol-% of diamond particles, at least 60 % of the diamond particles having sizes of at least 50 µm, the Young's modulus exceeding 600 GPa.

29. A body according to Claim 25, wherein said metal-silicon-carbon or boron-silicon-carbon phases comprises silicon carbide, metal carbides, boron carbides, metal silicides, boron silicides, metal carbosilicides, alloys of metals with silicon, and silicon.

30. A body according to Claim 25 - 29, wherein said metal is at least one metal from the group consisting of Ti, Zr, Hf, V, Nb, Ta, Cr, Mo, W, Mn, Re, Co, Ni, Cu, Ag, Al, Ge.

31. A body according to any one of Claims 25-30, wherein the metal content does not exceed 30 wt-% and preferably is less than 20 wt-%.

32. A body according to Claim 31, wherein the metal is chosen from the group of V, Nb, Ta and the metal content is less than 10 wt-%.

33. A body according to Claim 31, wherein the metal is chosen from the group of Mo, W and the metal content is less than 5 wt-%.

34. A body according to any one of Claims 25-33, wherein the body maintains its shape and its Young's modulus after exposure to a temperature of 1500°C in vacuum.

35. A body according to Claim 25, wherein diamond particles of sizes of about 10 µm or less are embedded and included in the matrix, the Vickers hardness of the matrix measured in an area between diamond particles being greater than 30 GPa for a load of 20 N.

36. A body according to Claim 35, wherein diamond particles of sizes of about 10 µm or less are embedded and included in the matrix, the Knoop hardness of the matrix being greater than 30 GPa for a load of 20 N.

37. A body according to Claim 25, wherein the diamond particles have one size fraction of particles being larger than 50 µm and one sizes fraction of particles having a size of 50 µm at the most, the mass ratio falling in the range of 0.25 to 2.5 and the mean particle size being larger than 10µm, preferably larger than 20µm.

38. A body according to Claim 25, wherein the diamond particles have one size fraction of large diamond particles and one size fraction of small diamond particles, the mass ratio falling in the range of 0.25 to 2.5 and the mean particle size being larger than 10µm, preferably larger than 20 µm.

39. A body according to Claim 25, wherein the body is hollow.

40. A body according to Claim 25, wherein the body comprises large diamond particles of a size larger than 20 µm, the matrix comprising 0-50 vol-% of small diamond particles having sizes less than 20 µm; 20-99 vol-% of silicon carbide; and 1-30 vol-% of other metal-silicon-carbon or boron-silicon-carbon phases; the matrix hardness being 20-63 GPa.

41. A body according to Claim 25, wherein the matrix hardness is 20-30 GPa.

42. A body according to Claim 25, wherein the matrix hardness is 50-63 GPa.

43. A body according to Claim 25, wherein the matrix hardness is 30-50 GPa.

## Patentansprüche

1. Niederdruckverfahren zur Herstellung eines Diamantverbundes aus Diamantteilchen, das die folgenden Schritte umfaßt: ein Werkstück vorbestimmter Größe und Form wird gebildet, das Werkstück wird erhitzt und die Temperatur und Dauer des Erhitzens werden so gesteuert, daß eine bestimmte, gewünschte Graphitmenge durch Graphitisierung von Diamantteilchen gebildet wird, wodurch ein Zwischenkörper gebildet wird, und man läßt eine Siliciumlegierung in den Zwischenkörper eindringen, wodurch ein fertiger Körper gebildet wird, der in makroskopischer Hinsicht dieselbe vorbestimmte Größe und Form wie das Werkstück aufweist.

2. Verfahren nach Anspruch 1, bei dem die Verfahrensschritte unter einem Druck von unter 50 bar, vorzugsweise unter 30 bar und besonders bevorzugt unter 2 bar, durchgeführt werden.

3. Verfahren nach Anspruch 1 oder 2, bei dem die durch Graphitisierung gebildete Graphitmenge 1 bis 50 Gew.-%, vorzugsweise 6 bis 30 Gew.-%, der Diamantmenge beträgt.

4. Verfahren nach einem der Ansprüche 1 bis 3, bei dem die Erhitzungstemperatur während der Graphitisierung niedriger als 1900°C, vorzugsweise niedriger als 1700°C, ist.

5. Verfahren nach Anspruch 4, bei dem die für die Graphitisierung erforderliche Temperatur und Dauer des Erhitzens für die jeweils verwendete Heizvorrichtung empirisch ermittelt wird.

6. Verfahren nach einem der Ansprüche 1 bis 5, bei dem das Werkstück mit einer Porosität von 25 bis 60 Vol.-% gebildet wird.

7. Verfahren nach einem der Ansprüche 1 bis 6, bei dem eine bestimmte Menge an Kohlenstoff dadurch in dem Werkstück abgeschieden wird, daß es einem gasförmigen Kohlenwasserstoff oder gasförmigen Kohlenwasserstoffen bei einer Temperatur ausgesetzt wird, die die Zersetzungstemperatur des Kohlenwasserstoffs oder der Kohlenwasserstoffe übersteigt.

8. Verfahren nach Anspruch 7, bei dem die Diamantkristalle mindestens etwas graphitisiert werden, bevor das Werkstück einem gasförmigen Kohlenwasserstoff oder gasförmigen Kohlenwasserstoffen bei einer Temperatur, die die Zersetzungstemperatur des Kohlenwasserstoffs oder der Kohlenwasserstoffe. übersteigt, ausgesetzt wird.

9. Verfahren nach Anspruch 7 oder 8, bei dem der Zwischenkörper durch maschinelle Bearbeitung die gewünschte Form und Größe des fertigen Körpers erhält, bevor der Schritt des Eindringens der flüssigen Siliciumlegierung durchgeführt wird.

10. Verfahren nach Anspruch 1 oder 2, bei dem der Zwischenkörper in Gegenwart dampfförmigen Siliciums oder einer dampfförmigen Siliciumlegierung erhitzt und dann zur gewünschten Form und Größe des fertigen Körpers maschinell bearbeitet wird, bevor der Schritt des Eindringens der flüssigen Siliciumlegierung durchgeführt wird.

11. Verfahren nach einem der Ansprüche 1 bis 10, bei dem das Werkstück mit einer ungleichförmigen Verteilung von Diamantteilchen unterschiedlicher Größe und Güte gebildet wird.

12. Verfahren nach einem der Ansprüche 1 bis 10, bei dem das Werkstück aus einer homogenen Mischung von Diamantteilchen unterschiedlicher Größe, gegebenenfalls unter Zugabe eines Bindemittels, gebildet wird.

13. Verfahren nach einem der Ansprüche 1 bis 10, bei dem die Diamantteilchen in dem Werkstück in nach und nach abnehmender Größe von der Oberfläche des Werkstücks zu dessen Mitte hin verteilt sind.

14. Verfahren nach einem der Ansprüche 1 bis 13, bei dem zwei oder mehr Werkstücke getrennt voneinander hergestellt werden und danach, vor den Schritten der Wärmebehandlung und der Infiltration, zusammengebracht werden.

15. Verfahren nach einem der Ansprüche 1 bis 8 oder 11 bis 14, bei dem das Werkstück in einer Form hergestellt wird und die Wärmebehandlung und das Eindringen der Siliciumlegierung erfolgen, nachdem das Werkstück aus der Form herausgenommen worden ist.

16. Verfahren nach einem der Ansprüche 1 bis 15, bei dem man eine Siliciumlegierung in den Zwischenkörper eindringen läßt, die mindestens ein Element aus der aus den Metallen Ti, Zr, Hf, V, Nb, Ta, Cr, Mo, W, Mn, Re, Co, Ni, Cu, Ag, Al und den Elementen B und Ge bestehenden Gruppe umfaßt.

17. Verfahren nach Anspruch 16, bei dem die Siliciumlegierung Ti, Zr und/oder Hf bis zu einer Menge von weniger als 50 Gew.-%, vorzugsweise weniger als 20 Gew.-%, enthält.

18. Verfahren nach Anspruch 16, bei dem die Siliciumlegierung V, Nb und/oder Ta bis zu einer Menge von weniger als 20 Gew.-%, vorzugsweise weniger als 10 Gew.-%, enthält.

19. Verfahren nach Anspruch 16, bei dem die Siliciumlegierung Cr und/oder Re bis zu einer Menge von weniger als 45 Gew.-%, vorzugsweise weniger als 20 Gew.-%, enthält.

20. Verfahren nach Anspruch 16, bei dem die Siliciumlegierung Mo und/oder W bis zu einer Menge von weniger als 10 Gew.-%, vorzugsweise weniger als 5 Gew.-%, enthält.

21. Verfahren nach Anspruch 16, bei dem die Siliciumlegierung Mn, Fe, Co und/oder Ni bis zu einer Menge von weniger als 60 Gew.-%, vorzugsweise weniger als 20 Gew.-%, enthält.

22. Verfahren nach Anspruch 16, bei dem die Siliciumlegierung Cu und/oder Ag bis zu einer Menge von weniger als 30 Gew.-%, vorzugsweise weniger als 15 Gew.-%, enthält.

23. Verfahren nach Anspruch 16, bei dem die Siliciumlegierung Al und/oder Ge bis zu einer Menge von weniger als 50 Gew.-%, vorzugsweise weniger als 20 Gew.-%, enthält.

24. Verfahren nach Anspruch 16, bei dem die Siliciumlegierung B bis zu einer Menge von weniger als 20 Gew.-%, vorzugsweise weniger als 8 Gew.-%, enthält.

25. Nach dem Verfahren gemäß Anspruch 1 hergestellter Körper, in dem Diamantteilchen an eine Matrix aus Metall-Silicium-Kohlenstoff- oder Bor-Silicium-Kohlenstoff-Phasen gebunden sind, wobei der Körper mindestens 20 Vol.-% Diamantteilchen, mindestens 25 Vol.-% Metall-Silicium-Kohlenstoffoder Bor-Silicium-Kohlenstoff-Phasen, vorzugsweise mehr als 35 Vol.-% Metall-Silicium-Kohlenstoff- oder Bor-Silicium-Kohlenstoff-Phasen, umfaßt und der Young-Modul 450 GPa übersteigt.

26. Körper nach Anspruch 25, umfassend mindestens 29 Vol.-% Diamantteilchen, mindestens 34 Vol.-% Metall-Silicium-Kohlenstoff- oder Bor-Silicium-Kohlenstoff-Phasen, und mit einem Young-Modul von mehr als 540 GPa.

27. Körper nach Anspruch 25, umfassend mindestens 46 Vol.-% Diamantteilchen mit Größen von höchstens etwa 30 µm, wobei der Young-Modul 560 GPa übersteigt.

28. Körper nach Anspruch 25, der mindestens 54 Vol.-% Diamantteilchen umfaßt, wobei mindestens 60 % der Diamantteilchen Größen von mindestens 50 µm haben, und einen Young-Modul von mehr als 600 GPa aufweist.

29. Körper nach Anspruch 25, bei dem die Metall-Silicium-Kohlenstoff- oder Bor-Silicium-Kohlenstoff-Phasen Siliciumcarbid, Metallcarbide, Borcarbide, Metallsilicide, Borsilicide, Metallcarbosilicide, Legierungen von Metallen mit Silicium, und Silicium umfassen.

30. Körper nach Anspruch 25 bis 29, bei dem das Metall mindestens ein Metall aus der aus Ti, Zr, Hf, V, Nb, Ta, Cr, Mo, W, Mn, Re, Co, Ni, Cu, Ag, Al, Ge bestehenden Gruppe ist.

31. Körper nach einem der Ansprüche 25 bis 30, bei dem der Metallgehalt 30 Gew.-% nicht übersteigt und vorzugsweise geringer als 20 Gew.-% ist.

32. Körper nach Anspruch 31, bei dem das Metall aus der aus V, Nb, Ta bestehenden Gruppe ausgewählt und der Metallgehalt geringer als 10 Gew.-% ist.

33. Körper nach Anspruch 31, bei dem das Metall aus der aus Mo, W bestehenden Gruppe ausgewählt und der Metallgehalt geringer als 5 Gew.-% ist.

34. Körper nach einem der Ansprüche 25 bis 33, bei dem der Körper seine Form und seinen Young-Modul beibehält, nachdem er einer Temperatur von 1500°C im Vakuum ausgesetzt worden ist.

35. Körper nach Anspruch 25, bei dem Diamantteilchen einer Größe von etwa 10 µm oder weniger in die Matrix eingebettet sind und von ihr umschlossen werden und bei dem die Vickers-Härte der Matrix, gemessen in einem Bereich zwischen Diamantteilchen, bei einer Last von 20 N größer als 30 GPa ist.

36. Körper nach Anspruch 35, bei dem Diamantteilchen einer Größe von etwa 10 µm oder weniger in die Matrix eingebettet sind und von ihr umschlossen werden und bei dem die Knoop-Härte der Matrix bei einer Last von 20 N größer als 30 GPa ist.

37. Körper nach Anspruch 25, bei dem die Diamantteilchen eine Größenfraktion von Teilchen, die größer als 50 µm sind, und eine Größenfraktion von Teilchen, die höchstens 50 µm groß sind, umfassen, wobei das Massenverhältnis in den Bereich von 0,25 bis 2,5 fällt und die mittlere Teilchengröße größer als 10 µm, vorzugsweise größer als 20 µm, ist.

38. Körper nach Anspruch 25, bei dem die Diamantteilchen eine Größenfraktion von großen Diamantteilchen und eine Größenfraktion von kleinen Diamantteilchen umfassen, wobei das Massenverhältnis in den Bereich von 0,25 bis 2,5 fällt und die mittlere Teilchengröße größer als 10 µm, vorzugsweise größer als 20 µm, ist.

39. Körper nach Anspruch 25, bei dem der Körper hohl ist.

40. Körper nach Anspruch 25, bei dem der Körper große Diamantteilchen einer Größe von mehr als 20 µm umfaßt, die Matrix 0 bis 50 Vol.-% kleine Diamantteilchen mit einer Größe von weniger als 20 µm; 20 bis 99 Vol.-% Siliciumcarbid; und 1 bis 30 Vol.-% andere Metall-Silicium-Kohlenstoff- oder Bor-Silicium-Kohlenstoff-Phasen aufweist; und wobei die Matrixhärte 20 bis 63 GPa beträgt.

41. Körper nach Anspruch 25, bei dem die Matrixhärte 20 bis 30 GPa beträgt.

42. Körper nach Anspruch 25, bei dem die Matrixhärte 50 bis 63 GPa beträgt.

43. Körper nach Anspruch 25, bei dem die Matrixhärte 30 bis 50 GPa beträgt.

## Revendications

1. Procédé basse pression pour fabriquer un composite en diamant à partir de particules de diamant, comprenant les étapes qui consistent à façonner une pièce ouvrée ayant une taille et une forme pré-déterminées, à chauffer la pièce ouvrée et à contrôler la température de chauffage et le temps de chauffage de façon à ce qu'une certaine quantité désirée de graphite soit créée par graphitisation des particules de diamant, en créant de cette façon un corps intermédiaire, et à infiltrer un alliage de silicium dans le corps intermédiaire, en créant de cette façon un corps final qui a les mêmes tailles et formes prédéterminées que la pièce ouvrée à l'échelle macroscopique.

2. Procédé selon la revendication 1, dans lequel les étapes du procédé sont effectuées sous une pression inférieure à 50 bars, de préférence inférieure à 30 bar, et plus préférentiellement inférieure à 2 bars.

3. Procédé selon la revendication 1 ou 2, dans lequel la quantité de graphite créée par graphitisation est comprise entre 1 et 50 % en poids, de préférence entre 6 et 30 % en poids de la quantité de diamant.

4. Procédé selon l'une quelconque des revendications 1 à 3, dans lequel la température de chauffage pendant la graphitisation est inférieure à 1 900 °C, de préférence inférieure à 1 700 °C.

5. Procédé selon la revendication 4, dans lequel la température de chauffage et le temps de chauffage nécessaires à la graphitisation sont déterminés de façon empirique pour l'équipement de chauffage utilisé.

6. Procédé selon l'une quelconque des revendications 1 à 5, dans lequel la pièce ouvrée est façonnée avec une porosité de 25 à 60 % en volume.

7. Procédé selon l'une quelconque des revendications 1 à 6, dans lequel une certaine quantité de carbone est déposée dans la pièce ouvrée en exposant celle-ci à un hydrocarbure gazeux ou à des hydrocarbures gazeux, à une température excédant la température de décomposition de l'hydrocarbure ou des hydrocarbures.

8. Procédé selon la revendication 7, dans lequel au moins une certaine graphitisation des cristaux de diamant est effectuée avant l'exposition de la pièce ouvrée à l'hydrocarbure gazeux ou aux hydrocarbures gazeux, à une température excédant la température de décomposition de l'hydrocarbure ou des hydrocarbures.

9. Procédé selon la revendication 7 ou 8, dans lequel le corps intermédiaire est usiné selon un corps final ayant la forme et la taille souhaitées, avant l'étape d'infiltration de l'alliage de silicium liquide.

10. Procédé selon la revendication 1 ou 2, dans lequel le corps intermédiaire est chauffé en présence de silicium ou d'alliage de silicium vapeur, et est ensuite usiné en un corps final ayant la forme et la taille souhaitées, avant l'étape d'infiltration de l'alliage liquide à base de silicium.

11. Procédé selon l'une quelconque des revendications 1 à 10, dans lequel la pièce ouvrée est façonnée avec une répartition non homogène de particules de diamant de différentes tailles et qualités.

12. Procédé selon l'une quelconque des revendications 1 à 10, dans lequel la pièce ouvrée est façonnée à partir d'un mélange homogène de particules de diamant de différentes tailles, éventuellement avec addition d'un liant.

13. Procédé selon l'une quelconque des revendications 1 à 10, dans lequel les particules de diamant présentes dans la pièce ouvrée sont réparties selon des tailles de plus en plus petites, depuis la surface de la pièce ouvrée vers le centre de celle-ci.

14. Procédé selon l'une quelconque des revendications 1 à 13, dans lequel deux pièces ouvrées, ou plus, sont fabriquées séparément, et après-cela sont assemblées avant les étapes de traitement thermique et d'infiltration.

15. Procédé selon l'une quelconque des revendications 1 à 8 et 11 à 14, dans lequel le façonnage de la pièce ouvrée est effectué dans un moule, le traitement thermique et l'infiltration de l'alliage de silicium étant réalisés après avoir retiré la pièce ouvrée du moule.

16. Procédé selon l'une quelconque des revendications 1 à 15, dans lequel l'alliage de silicium contenant au moins un élément choisi dans le groupe constitué des métaux Ti, Zr, Hf, V, Nb, Ta, Cr, Mo, W, Mn, Re, Co, Ni, Cu, Ag, Al, et des éléments B et Ge, est infiltré dans le corps intermédiaire.

17. Procédé selon la revendication 16, dans lequel l'alliage de silicium contient Ti, Zr, et/ou Hf à raison d'une teneur inférieure à 50 % en poids, de préférence inférieure à 20 % en poids.

18. Procédé selon la revendication 16, dans lequel l'alliage de silicium contient V, Nb, et/ou Ta, à raison d'une teneur inférieure à 20 % en poids, de préférence inférieure à 10 % en poids.

19. Procédé selon la revendication 16, dans lequel l'alliage de silicium contient Cr et/ou Re, à raison d'une teneur inférieure à 45 % en poids, de préférence inférieure à 20 % en poids.

20. Procédé selon la revendication 16, dans lequel l'alliage de silicium contient Mo et/ou W à raison d'une teneur inférieure à 10 % en poids, de préférence inférieure à 5 % en poids.

21. Procédé selon la revendication 16, dans lequel l'alliage de silicium contient Mn, Fe, Co, et/ou Ni à raison d'une teneur inférieure à 60 % en poids, de préférence inférieure à 20 % en poids.

22. Procédé selon la revendication 16, dans lequel l'alliage de silicium contient Cu et/ou Ag à raison d'une teneur inférieure à 30 % en poids, de préférence inférieure à 15 % en poids.

23. Procédé selon la revendication 16, dans lequel l'alliage de silicium contient Al et/ou Ge à raison d'une teneur inférieure à 50 % en poids, de préférence inférieure à 20 % en poids.

24. Procédé selon la revendication 16, dans lequel l'alliage de silicium contient B à raison d'une teneur inférieure à 20 % en poids, de préférence inférieure à 8 % en poids:

25. Corps fabriqué grâce au procédé selon la revendication 1, dans lequel les particules de diamant sont agrégées à une matrice constituée de phases métal - silicium - carbone ou bore - silicium - carbone, ledit corps contenant au moins 20 % en volume de particules de diamant, au moins 25 % en volume de phases métal - silicium - carbone ou bore - silicium - carbone, de préférence plus de 35 % en volume de phases métal - silicium - carbone ou bore - silicium - carbone, le module d'Young excédant 450 GPa.

26. Corps selon la revendication 25, ledit corps contenant au moins 29 % en volume de particules de diamant, au moins 34 % en volume de phases métal - silicium - carbone ou bore - silicium - carbone, le module d'Young excédant 540 GPa.

27. Corps selon la revendication 25, dans lequel ledit corps contient au moins 46 % en volume de particules de diamant dont la taille est d'environ 30 µm au plus, le module d'Young excédant 560 GPa.

28. Corps selon la revendication 25, dans lequel ledit corps contient au moins 54 % en volume de particules de diamant, au moins 60 % des particules de diamant ayant une taille d'au moins 50 µm, le module d'Young excédant 600 GPa.

29. Corps selon la revendication 25, dans lequel lesdites phases métal - silicium - carbone ou bore - silicium - carbone contiennent du carbure de silicium, des carbures métalliques, des carbures de bore, des siliciures métalliques, des siliciures de bore, des carbosiliciures métalliques, des alliages de métaux avec du silicium, et du silicium.

30. Corps selon la revendication 25 à 29, dans lequel ledit métal est au moins un métal choisi dans le groupe constitué de Ti, Zr, Hf, V, Nb,'Ta, Cr, Mo, W, Mn, Re, Co, Ni, Cu, Ag, Al, Ge.

31. Corps selon l'une quelconque des revendications 25 à 30, dans lequel la teneur en métal n'excède pas 30 % en poids, et de préférence est inférieure à 20 % en poids.

32. Corps selon la revendication 31, dans lequel le métal est choisi dans le groupe constitué de V, Nb, Ta, et la teneur en métal est inférieure à 10 % en poids.

33. Corps selon la revendication 31, dans lequel le métal est choisi dans le groupe constitué de Mo, W, et la teneur en métal est inférieure à 5 % en poids.

34. Corps selon l'une quelconque des revendications 25 à 33, dans lequel le corps conserve sa forme et son module d'Young après exposition à une température de 1 500 °C sous vide.

35. Corps selon la revendication 25, dans lequel des particules de diamant dont la taille est d'environ 10 µm ou moins, sont noyées et incluses dans la matrice, la dureté Vickers de la matrice, mesurée dans une zone située entre les particules de diamant, étant supérieure à 30 GPa pour une charge de 20 N.

36. Corps selon la revendication 35, dans lequel des particules de diamant dont la taille est d'environ 10 µm ou moins, sont noyées et incluses dans la matrice, la dureté Knoop de la matrice étant supérieure à 30 GPa pour une charge de 20 N.

37. Corps selon la revendication 25, dans lequel les particules de diamant contiennent une fraction granulométrique constituée de particules supérieures à 50 µm, et une fraction granulométrique constituée de particules de 50 µm au plus, le rapport massique étant compris entre 0,25 et 2,5, et la taille particulaire moyenne étant supérieure à 10 µm, de préférence supérieure à 20 µm.

38. Corps selon la revendication 25, dans lequel les particules de diamant contiennent une fraction granulométrique constituée grosses particules de diamant et une fraction granulométrique constituée de petites particules de diamant, le rapport massique étant compris entre 0,25 et 2,5, et la taille particulaire moyenne étant supérieure à 10 µm, de préférence supérieure à 20 µm.

39. Corps selon la revendication 25, dans lequel le corps est creux.

40. Corps selon la revendication 25, dans lequel le corps contient de grosses particules de diamant dont la taille est supérieure à 20 µm, la matrice contenant 0 à 50 % en volume de petites particules de diamant dont la taille est inférieure à 20 µm; 20 à 99 % en volume de carbure de silicium; et 1 à 30 % en volume d'autres phases métal - silicium - carbone ou bore - silicium - carbone; la dureté de la matrice étant comprises entre 20 et 63 GPa.

41. Corps selon la revendication 25, dans lequel la dureté de la matrice est comprise entre 20 et 30 GPa.

42. Corps selon la revendication 25, dans lequel la dureté de la matrice est comprise entre 50 et 63 GPa.

43. Corps selon la revendication 25, dans lequel la dureté de la matrice est comprise entre 30 et 50 GPa.
